# FASCICULE DE BREVET EUROPEEN

(11) **EP 2 514 167 B1**
(45) Date de publication et mention de la délivrance du brevet: **08.02.2017**
(21) Numéro de dépôt: 10809012.7
(22) Date de dépôt: 14.12.2010
(51) Int. Cl.: H04L 29/06, H04L 12/28, H04L 12/24

(54) **PROCEDE ET DISPOSITIF DE CONTROLE**
ÜBERWACHUNGSVERFAHREN UND VORRICHTUNG
MONITORING METHOD AND DEVICE

(30) Priorité: 18.12.2009 FR 0959255
(43) Date de publication de la demande: 24.10.2012
(73) Titulaire: Orange, 75015 Paris (FR)
(72) Inventeur: DUGEON, Olivier, F-22560 Pleumeur Bodou (FR); MAHDI, Mohamed, F-92160 Antonny (FR); BARS, Rémi, F-22700 Louannec (FR)
(74) Mandataire: Delumeau, François Guy
(86) Numéro de dépôt international: PCT/FR2010/052719
(87) Numéro de publication internationale: WO 2011/073569

(56) Documents cités:
- WO-A1-2009/113931
- US-A1- 2009 089 353

## Description

### Arrière-plan de l'invention

La présente invention se rapporte au domaine des réseaux de télécommunication dans lesquels les terminaux communiquent via le protocole UPnP défini par le Forum UPnP (Universal Plug & Play). Il peut s'agir par exemple d'un réseau domestique, ou d'un réseau local.

De façon connue, le service UPnP A/V (Audio/Video) porté par ce protocole vise à permettre l'interopérabilité et l'interconnexion d'équipements multimédia, sans configuration par l'utilisateur. Celui-ci peut notamment aisément partager, par l'intermédiaire de ce protocole, des contenus entre les différents équipements multimédia de son réseau domestique (ex. partage de photos entre une console de jeux et un terminal mobile). On notera que par partage de contenus, on entend ici donner l'accès à ces contenus, afin de pouvoir les consulter, les visualiser, les exécuter, les télécharger, etc.

Dans la suite de la description, on parlera du service UPnP A/V pour désigner un ensemble d'équipements multimédia Interconnectés entre eux par un réseau local ou domestique et utilisant le protocole UPnP pour communiquer entre eux à travers ce réseau.

Un dispositif (ex. dispositif de contrôle, serveur de contenus, terminal, etc.) est dit dispositif UPnP A/V s'il est conforme au standard UPnP A/V ou à un autre standard équivalent ou dérivé, notamment s'il utilise un protocole de commande conforme à un tel standard.

On distingue généralement, dans les architectures du service UPnP A/V différents types de dispositifs UPnP A/V : les dispositifs de contrôle DMC (Digital Media Controller), les serveurs de contenu DMS (Digital Media Server) et les dispositifs de restitution de contenu DMR (Digital Media Renderer), DMA (Digital Media Adapter) et DMP (Digital Media Player).

Dans un service UPnP A/V, le dispositif de contrôle DMC a un rôle central en ce qu'il permet de découvrir les autres dispositifs UPnP A/V du réseau, les services offerts par ces dispositifs, et la mise en relation d'un serveur DMS avec un dispositif de restitution DMR, DMA ou DMP pour que ce dispositif de restitution restitue un contenu multimédia indexé par ce serveur DMS.

Historiquement, le service UPnP A/V permettait l'échange de contenus multimédia locaux entre différents équipements du réseau domestique dans lequel ils étaient hébergés. Or, on assiste aujourd'hui à une volonté d'étendre le partage de contenus multimédia entre des équipements appartenant à des réseaux domestiques distants.

En réponse à cette attente, le forum UPnP propose, dans le cadre du groupe de travail « Remote Access », un nouveau service basé sur la technologie des réseaux privés virtuels (ou VPN, Virtual Private Network). De façon connue, cette technologie garantit une sécurité forte des échanges de contenus entre les réseaux distants.

Toutefois, la solution proposée par le forum UPnP doit gérer des problèmes de conflits d'adresses IP (Internet Protocol) entre les différents réseaux domestiques dont elle gère l'interface. En effet, les plans d'adressage des réseaux domestiques étant privés, il est courant qu'ils soient identiques, au moins en partie. De même, la gestion et l'échange des clefs d'authentification pour l'établissement des tunnels VPN n'a pas à ce jour de solution satisfaisante. WO 2009/113931 A1 propose un mécanisme de gestion des droits d'accès distant à un réseau domestique basé sur des identités iMS. Un tel mécanisme est cependant limité à des connections passant par un réseau iMS.

Il existe donc un besoin d'une solution permettant le partage de contenus sécurisés entre réseaux distants ne présentant pas ces inconvénients.

### Objet et résumé de l'invention

La présente invention répond à ce besoin en confiant la mise en relation des réseaux locaux distants cherchant à partager des contenus, à une entité de confiance située à l'interface entre ces réseaux. Cette entité de confiance est par exemple localisée dans un réseau externe, auquel les deux réseaux locaux ont accès par l'intermédiaire de passerelles d'accès telles qu'une passerelle domestique (ou « Home Gateway »).

L'invention propose avantageusement de mettre en place au niveau de cette entité de confiance un mécanisme permettant de sécuriser les échanges entre les réseaux distants, établissant un contrôle de l'existence d'une règle autorisant l'accès à des contenus du réseau local distant par un utilisateur.

Dans la suite de la description, par souci de simplification, on identifiera par le même terme l'utilisateur d'un terminal et le terminal qui lui permet d'accéder à des contenus.

Diverses entités coopèrent à la sécurisation des échanges entre les réseaux locaux distants, conformément à l'invention : l'entité de confiance mais également des dispositifs de contrôle situés dans chacun des réseaux locaux ainsi que les passerelles d'accès faisant l'interface entre ces dispositifs de contrôle et l'entité de confiance.

On notera que l'invention s'applique de façon privilégiée au partage de contenus entre réseaux locaux distants. Toutefois, invention s'applique également au partage de contenus entre un réseau local et un équipement en situation de nomadisme, équipé d'un modem routeur conforme à un standard de télécommunications mobile de troisième génération ou équipé d'une interface Wifi, et faisant office de passerelle d'accès au réseau de l'entité de confiance via un réseau de télécommunication mobile de troisième génération ou un « hotspot » Wifi.

Ainsi, selon un premier aspect, l'invention vise un procédé de mise en oeuvre d'une interface entre un premier réseau et un second réseau, mis en oeuvre par une entité de confiance, ledit procédé comportant :
- une étape de réception, en provenance d'un dispositif de contrôle du premier réseau, d'un message de notification contenant une règle d'accès distante autorisant un accès d'un utilisateur du second réseau à des contenus multimédia d'un utilisateur du premier réseau ;
- une étape de réception d'une requête d'accès en provenance dudit utilisateur du second réseau relative à au moins un contenu multimédia dudit utilisateur du premier réseau ;
- une étape de vérification visant à contrôler que ledit utilisateur est autorisé à accéder à des contenus multimédia dudit utilisateur du premier réseau au moyen de la règle d'accès distante ;
- si ledit utilisateur du second réseau est autorisé, une étape de transfert de la requête d'accès vers une passerelle du premier réseau ; et
- une étape de rejet de la requête sinon.

Corrélativement, l'invention vise également une entité de confiance mettant en oeuvre une interface entre un premier réseau et un second réseau, comportant :
- des moyens de réception d'un message de notification en provenance d'un dispositif de contrôle du premier réseau, ledit message contenant une règle d'accès distante autorisant un accès d'un utilisateur du second réseau à des contenus multimédia d'un utilisateur du premier réseau ;
- des moyens de réception d'une requête d'accès en provenance d'un utilisateur du second réseau relative à au moins un contenu multimédia d'un utilisateur du premier réseau indexé dans le premier réseau ;
- des moyens de vérification visant à contrôler que ledit utilisateur du second réseau est autorisé à accéder à des contenus multimédia dudit utilisateur du premier réseau au moyen de la règle d'accès distante ;
- des moyens de transfert de la requête d'accès vers une passerelle du premier réseau activés si ledit utilisateur du second réseau est autorisé ; et
- des moyens de rejet de la requête activés sinon.

De façon privilégiée :
- les premier et second réseaux sont des réseaux locaux ou domestiques ;
- l'entité de confiance est hébergée par un fournisseur de services, localisé dans un réseau externe aux premier et second réseaux. En particulier, le fournisseur de services peut appartenir notamment à un réseau de type Internet ou Intranet ; et
- la passerelle est une passerelle domestique ou résidentielle permettant au premier réseau de joindre l'entité de confiance.

Ainsi, le contrôle d'accès à un contenu multimédia hébergé dans le premier réseau est réalisé par l'entité de confiance en fonction d'une règle d'accès distante imposée par ce premier réseau.

Cette règle d'accès distante permet de filtrer les utilisateurs du second réseau pouvant accéder à des contenus d'un utilisateur du premier réseau.

L'invention permet ainsi de bénéficier de la sécurité et des procédures d'authentification Inhérentes au fournisseur de services hébergeant l'entité de confiance pour garantir la sécurité des échanges entre les réseaux distants.

En outre, l'invention ne connaît pas de problèmes de conflits d'adresses entre les deux réseaux : en effet, l'entité de confiance est configurée de sorte à transférer les requêtes d'accès des utilisateurs autorisés à accéder à des contenus hébergés dans le premier réseau vers la passerelle d'accès du premier réseau. Or, de façon connue de l'homme du métier, celle-ci dispose d'une adresse IP publique l'identifiant de manière unique.

Par ailleurs, l'invention permet de masquer le serveur indexant le contenu : l'accès direct du terminal du second réseau au serveur de contenus n'est pas permis, puisque les requêtes d'accès du terminal transitent par l'entité de confiance.

Dans un mode particulier de réalisation, la requête en provenance du terminal du second réseau est transportée par le protocole HTTP ou par le protocole HTTPS.

Les échanges entre les deux réseaux distants bénéficient ainsi des procédures d'authentification et de sécurisation des échanges propres au protocole HTTPS. En outre, lorsque l'invention est utilisée pour permettre le partage de contenus entre des équipements UPnP A/V, le protocole UPnP A/V prévoyant déjà le transport des contenus multimédias par le protocole HTTP, l'invention ne demande que peu d'adaptation.

Dans un mode particulier de réalisation de l'invention, le procédé de mise en oeuvre d'une Interface comprend en outre préalablement à l'étape de transfert, une étape d'authentification de l'utilisateur du second réseau, l'étape de transfert étant mise en oeuvre lorsque l'utilisateur du second réseau est valablement authentifié.

Cette authentification ajoute un degré supplémentaire de sécurisation des échanges entre les réseaux distants.

Selon un second aspect, l'invention vise également un procédé de traitement, mis en oeuvre par une passerelle d'un premier réseau, ce procédé comprenant :
- une étape de configuration du premier réseau, au moyen d'une règle d'accès locale reçue d'un dispositif de contrôle du premier réseau, et configurant la passerelle de sorte que, sur réception d'une requête d'accès relative à un catalogue de contenus multimédias d'un utilisateur du premier réseau en provenance d'un utilisateur d'un second réseau par l'intermédiaire d'une entité de confiance s'interfaçant entre le premier réseau et le second réseau, ladite passerelle transmet ledit catalogue de contenus multimédia, auxquels ledit utilisateur du second réseau est autorisé à accéder ;
- sur réception d'une requête d'accès au catalogue de contenus en provenance dudit utilisateur du second réseau, une étape de vérification visant à contrôler que l'utilisateur du second réseau est autorisé à accéder au catalogue ;
- si ledit utilisateur du second réseau est autorisé :
   o une étape d'obtention du catalogue ;
   o une étape d'envoi de ce catalogue à ladite entité de confiance ;
- sinon une étape de rejet de la requête.

Corrélativement, l'invention vise également une passerelle d'un premier réseau, comprenant :
- des moyens de configuration du premier réseau, au moyen d'une règle d'accès locale reçue d'un dispositif de contrôle du premier réseau, adaptés à configurer la passerelle de sorte que, sur réception d'une requête d'accès relative à un catalogue de contenus multimédias d'un utilisateur du premier réseau en provenance d'un utilisateur d'un second réseau, par l'intermédiaire d'une entité de confiance s'interfaçant entre le premier réseau et le second réseau, ladite passerelle transmet ledit catalogue de contenus, auxquels ledit utilisateur du second réseau est autorisé à accéder ;
- des moyens de vérification, activés sur réception d'une requête d'accès au catalogue de contenus en provenance d'un utilisateur du second réseau, et visant à contrôler que l'utilisateur du second réseau est autorisé à accéder au catalogue ;
- des moyens, activés si ledit utilisateur du second réseau est autorisé :
   o d'obtention du catalogue ; et
   o d'envoi de ce catalogue à ladite entité de confiance ;
- des moyens, activés sinon, de rejet de la requête.

Ainsi, la passerelle est avantageusement configurée de sorte à n'accepter des requêtes d'accès à un catalogue de contenus du premier réseau qu'en provenance exclusive de l'entité de confiance, et à fournir ce catalogue à cette entité. De cette sorte, on s'assure que les échanges de contenus entre les réseaux distants transitent par l'entité de confiance.

La passerelle contribue à diffuser auprès de l'entité de confiance le catalogue des contenus partagés par le premier réseau. Avantageusement, l'entité de confiance pourra transmettre ce catalogue à l'utilisateur du second réseau pour que celui-ci puisse naviguer dans le catalogue et sélectionner un contenu auquel il souhaite accéder.

Ainsi, la passerelle permet non seulement de filtrer les utilisateurs pouvant accéder à des contenus du premier réseau, mais également de filtrer les contenus proposés à ces utilisateurs, par l'intermédiaire d'un catalogue de contenus.

On notera toutefois que si le catalogue de contenus est offert pour consultation à un utilisateur du second réseau, cet utilisateur ignore où se situe le catalogue. L'invention évite en effet soigneusement de publier les serveurs de contenus détenant des contenus à partager. Aucun accès direct à ces contenus n'est possible sans mise en relation préalable par l'entité de confiance.

En outre, l'accès au catalogue de contenus du premier réseau n'est ouvert par la passerelle qu'à des utilisateurs autorisés vérifiant une règle d'accès locale fixée par le premier réseau. On met en place un second contrôle d'accès, cette fois-ci, au niveau de la passerelle. Ce second contrôle d'accès permet de rejeter les requêtes issues de terminaux qui auraient réussi à usurper l'identité de l'entité de confiance, et à accéder à la passerelle sans passer par elle.

Dans un mode particulier de réalisation de l'invention, l'étape de configuration est mise en oeuvre sur réception d'un message de notification comprenant la règle d'accès locale et une règle de redirection selon laquelle la passerelle transfère vers un serveur de contenus une requête d'accès à un contenu déterminé reçue.

De cette sorte, la passerelle transfère directement au serveur de contenus concerné une requête reçue de l'utilisateur du second réseau portant sur un contenu indexé par ce serveur.

Dans un mode de réalisation particulier de l'invention, le procédé de traitement comprend en outre :
- une étape de reconfiguration de la passerelle à l'aide d'une règle de redirection selon laquelle la passerelle accepte une requête d'accès à un contenu multimédia reçue d'un utilisateur du second réseau et la transfère vers le serveur indexant ce contenu ;
- une étape d'envoi d'une adresse IP de la passerelle à destination de l'utilisateur du second réseau via l'entité de confiance.

Cette règle de redirection vient compléter la règle d'accès locale reçue du dispositif de contrôle du premier réseau selon laquelle toutes les requêtes concernant un catalogue de contenus du premier réseau transitent obligatoirement par l'entité de confiance.

On autorise ainsi par le biais de cette règle de redirection, un accès direct de l'utilisateur du second réseau au contenu auquel il souhaite accéder. Ceci simplifie avantageusement la procédure d'accès au contenu, et permet notamment de ne pas surcharger l'entité de confiance ni la passerelle.

En effet, les contenus multimédia sont dès lors échangés directement entre le terminal de l'utilisateur du second réseau et le serveur de contenus du premier réseau, via les passerelles respectives des deux réseaux distants. Par conséquent, l'invention peut être aisément déployée à grande échelle, contrairement aux solutions VPN qui sont relativement complexes à mettre en oeuvre dans un tel contexte et peuvent subir des problèmes de performances lors de la montée en charge.

On notera toutefois que l'accès direct de l'utilisateur au contenu du premier réseau n'est permis qu'après la mise en relation des deux réseaux par l'entité de confiance. Autrement dit, cet accès direct n'est pas permis sans vérification que l'utilisateur est autorisé à accéder au contenu par une règle d'accès distante. Par conséquent, l'accès direct du terminal n'est permis que lorsque celui-ci apparaît comme fiable.

Selon un troisième aspect, l'invention vise un procédé de contrôle mis en oeuvre par un dispositif de contrôle d'un premier réseau, comprenant :
- une étape de réception d'un message, émis par un utilisateur du premier réseau, ledit message contenant une règle d'accès autorisant un utilisateur d'un second réseau à accéder à au moins un contenu multimédia, ce contenu étant indexé auprès d'un serveur de contenus du premier réseau ;
- une étape d'envoi, à une entité de confiance gérant l'interface entre le premier réseau et le second réseau, d'un premier message de notification contenant une règle d'accès distante autorisant un accès dudit utilisateur du second réseau à des contenus dudit utilisateur du premier réseau ; et
- une première étape de commande d'une passerelle du premier réseau au moyen d'une règle d'accès locale configurant ladite passerelle, de sorte que ladite passerelle transmet un catalogue de contenus auxquels l'utilisateur du second réseau est autorisé à accéder sur réception d'une requête d'accès relative au catalogue en provenance dudit utilisateur du second réseau par l'intermédiaire de ladite entité de confiance.

Corrélativement, l'invention vise également un dispositif de contrôle d'un premier réseau, comprenant :
- des moyens de réception d'un message, émis par un utilisateur du premier réseau, ce message contenant une règle d'accès autorisant un utilisateur d'un second réseau à accéder à au moins un contenu multimédia, ce contenu étant indexé auprès d'un serveur de contenus du premier réseau ;
- des moyens d'envoi, à une entité de confiance s'interfaçant entre le premier réseau et le second réseau, d'un premier message de notification contenant une règle d'accès distante autorisant un accès d'un utilisateur du second réseau à des contenus multimédias d'un utilisateur du premier réseau ; et
- des moyens de commande d'une passerelle du premier réseau au moyen d'une règle d'accès locale configurant ladite passerelle, de sorte que ladite passerelle transmet un catalogue de contenus auxquels un utilisateur du second réseau est autorisé à accéder sur réception d'une requête d'accès relative audit catalogue en provenance dudit utilisateur du second réseau par l'intermédiaire de ladite entité de confiance.

Ainsi, le dispositif de contrôle selon l'invention permet, sur réception d'une autorisation de partage d'un contenu déterminé par l'utilisateur du premier réseau, d'une part de configurer l'entité de confiance avec une règle d'accès distante lui permettant de filtrer les utilisateurs souhaitant accéder à ses contenus, et d'autre part de configurer la passerelle auquel l'entité de confiance transfère les requêtes d'accès à des catalogues de contenus émanant d'utilisateurs du second réseau, pour que celle-ci transmette ces catalogues aux utilisateurs.

Le procédé et le dispositif de contrôle selon l'invention présentent donc des avantages similaires au procédé et au dispositif de mise en oeuvre de l'interface entre les réseaux distants, en ce sens qu'il favorise la sécurisation des échanges par le biais de la configuration de l'entité de confiance et de la passerelle.

Dans un mode particulier de réalisation, la première étape de commande comprend un envoi d'un second message de notification comprenant la règle d'accès locale et une règle de redirection selon laquelle la passerelle transfère vers un serveur de contenus une requête d'accès à un contenu déterminé reçue.

La nouvelle configuration de la passerelle permet à celle-ci de transmettre directement au serveur de contenus concernés les requêtes d'accès émanant de l'utilisateur du second réseau.

Dans un mode particulier de réalisation le procédé de contrôle comprend en outre :
- une étape d'envoi à l'utilisateur du premier réseau d'une liste comprenant au moins un serveur de contenus du premier réseau indexant des contenus multimédia ; et
- sur réception d'une sélection par l'utilisateur du premier réseau d'un serveur de ladite liste, une étape d'envoi à celui-ci d'une liste des contenus multimédia indexés auprès de ce serveur, pour sélection d'au moins un contenu multimédia auquel il autorise un utilisateur du second réseau à accéder.

Ainsi, le procédé de contrôle selon l'invention gère également la sélection des contenus et des serveurs pour lesquels l'utilisateur du premier réseau souhaite partager l'accès avec un utilisateur du second réseau. Le dispositif de contrôle selon l'invention est donc adapté, dans ce mode de réalisation, à annoncer les catalogues de contenus et les contenus du premier réseau. Dans un mode particulier de réalisation, le procédé de contrôle comprend en outre :
- une étape de détection de la fin d'un accès à un contenu multimédia par l'utilisateur du second réseau ; et
- une deuxième étape de commande configurant la passerelle de sorte à désactiver une règle de redirection appliquée par la passerelle et selon laquelle celle-ci transfère au serveur indexant le contenu multimédia, une requête d'accès à ce contenu reçue d'un utilisateur du second réseau.

De cette sorte, il est mis fin à l'accès direct par l'utilisateur du second réseau au contenu hébergé dans le premier réseau.

Selon un quatrième aspect, l'invention vise un procédé de transfert, mis en oeuvre par un dispositif de contrôle d'un premier réseau, comprenant :
- sur réception d'une requête d'accès d'un utilisateur du premier réseau relative à au moins un contenu multimédia d'un utilisateur d'un second réseau auxquels l'utilisateur du premier réseau est autorisé à accéder par une règle d'accès, une étape d'interrogation d'une entité de confiance s'interfaçant entre le premier réseau et le second réseau, en vue d'obtenir un catalogue de contenus;
- une étape de transfert d'une requête d'accès à un contenu multimédia sélectionné par l'utilisateur parmi ce catalogue, en provenance de l'utilisateur du premier réseau vers l'entité de confiance.

Corrélativement, l'invention vise un dispositif de contrôle d'un premier réseau, comprenant :
- des moyens, activés sur réception d'une requête d'accès d'un utilisateur du premier réseau relative à au moins un contenu multimédia d'un utilisateur d'un second réseau auxquels l'utilisateur du premier réseau est autorisé à accéder par une règle d'accès, d'interrogation d'une entité de confiance s'interfaçant entre le premier réseau et le second réseau, en vue d'obtenir un catalogue de contenus;
- des moyens de transfert d'une requête d'accès à un contenu multimédia sélectionné parmi ce catalogue, en provenance de l'utilisateur du premier réseau vers l'entité de confiance.

Dans un mode particulier de réalisation, les différentes étapes des procédés de mise en oeuvre d'une interface, de traitement, de contrôle, et de transfert, sont déterminées par des instructions de programmes d'ordinateurs.

En conséquence, l'invention vise aussi des programmes d'ordinateur sur un support d'informations, ces programmes étant susceptibles d'être mis en oeuvre dans une entité de confiance, une passerelle, un dispositif de contrôle ou plus généralement dans un ordinateur, ces programmes comportant des instructions adaptées à la mise en oeuvre des étapes des procédés de mise en oeuvre d'une interface, de traitement, de contrôle, et de transfert tels que décrits ci-dessus.

Ces programmes peuvent utiliser n'importe quel langage de programmation, et être sous la forme de codes source, codes objet, ou de codes intermédiaire entre code source et code objet, tels que dans une forme partiellement compilée, ou dans n'importe quelle autre forme souhaitable.

L'invention vise aussi des supports d'informations lisibles par un ordinateur, et comportant des instructions des programmes d'ordinateur tels que mentionnés ci-dessus.

Les supports d'informations peuvent être n'importe quelle entité ou dispositif capable de stocker le programme. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'informations peuvent être des supports transmissibles tels qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'informations peuvent être un circuit intégré dans lequel le programme est incorporé, le circuit étant adapté pour exécuter ou pour être utilisé dans l'exécution des procédés en question.

On peut également envisager, dans d'autres modes de réalisation, que les procédés de mise en oeuvre d'une interface, de traitement, de contrôle, et de transfert, l'entité de confiance, la passerelle, les dispositifs de contrôle selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, dans son environnement, un système de télécommunications comportant une entité de confiance, des passerelles et des dispositifs de contrôle conformes à l'invention, dans un mode particulier de réalisation ;
- les figures 2A, 2B et 2C représentent respectivement, dans un mode particulier de réalisation, l'architecture matérielle d'un dispositif de contrôle, d'un routeur et d'une entité de confiance conformes à l'invention ;
- la figure 3 représente une base de données liée à une entité de confiance conforme à l'invention et comprenant des profils utilisateur ;
- les figures 4A, 4B et 4C représentent schématiquement les différentes fonctions assurées respectivement par le dispositif de contrôle, la passerelle et l'entité de confiance, dans un mode particulier de réalisation de l'invention ; et
- les figures 5, 6A, 6B, 6C et 7 illustrent les principales étapes des procédés de mise en oeuvre d'une interface, de traitement, de contrôle, et de transfert conformes à l'invention, dans un mode particulier de réalisation.

### Description détaillée d'un mode de réalisation

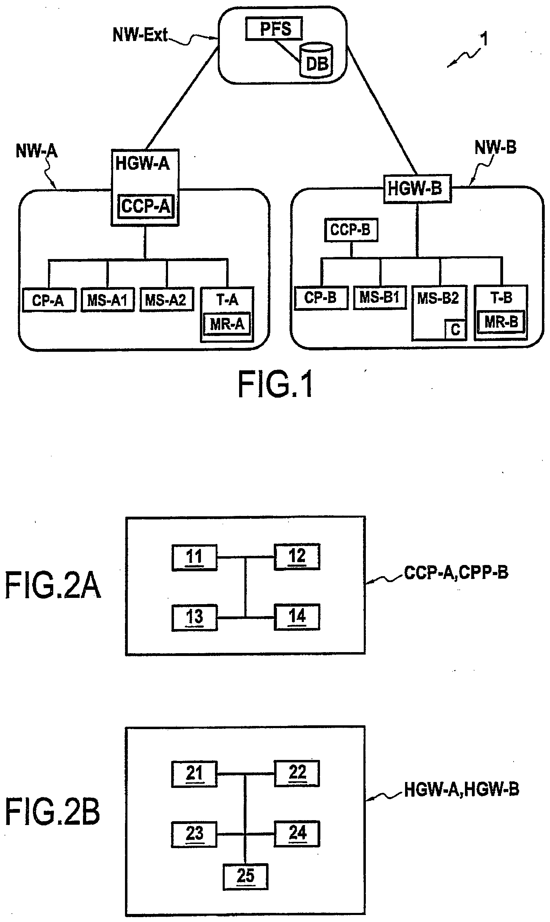

La **figure 1** représente, dans son environnement, un système 1 de télécommunications permettant à deux réseaux de télécommunications locaux distants, NW-A et NW-B, appartenant respectivement aux utilisateurs Alice et Bob, de partager des contenus multimédia, tels que des photos, des fichiers de données, des vidéos, etc.

Plus précisément, on suppose ici que Bob souhaite partager avec Alice un contenu multimédia C hébergé dans son réseau NW-B. Autrement dit, Bob souhaite permettre à Alice d'accéder au contenu C.

Le réseau NW-B de Bob est un réseau local, comprenant un ensemble d'équipements multimédia interconnectés entre eux par des interfaces de type Ethernet, WiFi et/ou PLC, et utilisant le protocole UPnP pour communiquer à travers ce réseau.

Parmi ces équipements figurent notamment :
- un terminal UPnP T-B, qui intègre un serveur de restitution MR-B ;
- un point de contrôle CP-B ; et
- des serveurs UPnP de contenus MS-B1 et MS-B2. Le contenu C est indexé par le serveur MS-B2.

Ces diverses entités sont connues de l'homme du métier, et ne seront de ce fait pas détaillées davantage ici.

On notera que T-B, CP-B, MS-B1, et MS-B2 correspondent ici à des équipements distincts.

En variante, les fonctions logiques mises en oeuvre par ces équipements peuvent être mises en oeuvre par un même équipement. Par exemple, le point de contrôle CP-B peut être intégré au terminal T-B.

Le terminal T-B peut-être un ordinateur, un téléviseur, un téléphone mobile, ou tout autre dispositif supportant le service UPnP A/V et/ou DLNA.

Au sein du réseau local NW-B se trouve également un dispositif de contrôle CCP-B, conforme à l'invention.

Ce dispositif de contrôle a ici l'architecture matérielle d'un ordinateur.

En référence à la **figure 2A****,** il comporte notamment un processeur 11, une mémoire vive 12, et une mémoire morte 13.

La mémoire morte 13 constitue un support d'enregistrement conforme à l'invention, lisible par le processeur 11 du dispositif de contrôle et sur lequel est enregistré un programme d'ordinateur conforme à l'invention, comportant des instructions pour l'exécution des étapes d'un procédé de contrôle et des instructions pour l'exécution des étapes d'un procédé de transfert selon invention, décrites ultérieurement.

Le dispositif de contrôle CCP-B comprend également des moyens de communication 14, pour communiquer à travers le réseau NW-B ainsi qu'avec des entités d'un réseau externe NW-Ext, par l'intermédiaire d'une passerelle domestique HGW-B, conforme à l'invention. Les moyens de communication 14 comprennent notamment une interface réseau respectant les standards connus de l'homme du métier, ainsi que des moyens lui permettant de communiquer selon les protocoles UPnP et HTTPS. Le dispositif de contrôle CCP-B peut également être intégré à un autre dispositif du réseau domestique tel que la passerelle HGW-B ou le serveur MS-B.

Le réseau externe NW-Ext est ici le réseau public Internet.

Le réseau local NW-B est connecté au réseau externe NW-Ext par l'intermédiaire de la passerelle domestique HGW-B.

La passerelle HGW-B a ici l'architecture matérielle d'un ordinateur.

En référence à la **figure 2B****,** la passerelle domestique HGW-B comprend notamment un processeur 21, une mémoire vive 22, et une mémoire morte 23.

La mémoire morte 23 constitue un support d'enregistrement conforme à l'invention, lisible par le processeur 21 de la passerelle et sur lequel est enregistré un programme d'ordinateur conforme à l'invention, comportant des instructions pour l'exécution des étapes d'un procédé de traitement selon l'invention, décrites ultérieurement.

La passerelle HGW-B comprend également des moyens de communication 24 pour communiquer avec les équipements du réseau NW-B (intégrant une ou plusieurs interfaces réseau de type Ethernet, PLC et/ou WiFi), des moyens de communication 25 pour communiquer avec le réseau externe NW-Ext (intégrant notamment une interface ADSL, Ethernet et/ou optique), connus en soi, ainsi que des moyens lui permettant de communiquer selon les protocoles UPnP et HTTPS.

Dans l'exemple envisagé ici, le réseau NW-A d'Alice a une structure identique au réseau NW-B.

Ainsi, le réseau NW-A est un réseau local, comprenant un ensemble d'équipements multimédia Interconnectés entre eux par des interfaces de type Ethernet, WiFi et/ou PLC, et utilisant le protocole UPnP pour communiquer à travers ce réseau.

Parmi ces équipements figurent notamment un terminal UPnP T-A intégrant un serveur de restitution MR-A, un point de contrôle CP-A, et des serveurs UPnP de contenus MS-A1 et MS-A2.

Le terminal T-A peut-être un ordinateur, un téléviseur, un téléphone mobile, ou tout autre dispositif supportant le service UPnP A/V et/ou DLNA.

Le réseau local NW-A est connecté au réseau externe NW-Ext par l'intermédiaire d'une passerelle domestique HGW-A, conforme à l'invention. La passerelle domestique HGW-A est d'architecture semblable à celle de la passerelle domestique HGW-B représentée sur la figure 2B.

Cette passerelle domestique HGW-A intègre ici un dispositif de contrôle CCP-A conforme à l'invention, et disposant d'une architecture semblable à celle du dispositif de contrôle CCP-B représentée sur la figure 2A.

Conformément à l'invention, la mise en oeuvre de l'interface entre les réseaux locaux HGW-A et HGW-B est confiée à une entité de confiance PFS, localisée dans le réseau NW-Ext, et conforme à l'invention.

L'entité de confiance PFS est ici une plateforme de service, hébergée par un fournisseur de services, et auprès de laquelle les utilisateurs Bob et Alice se sont préalablement enregistrés afin de pouvoir partager entre leurs terminaux UPnP des contenus stockés dans leurs réseaux locaux respectifs. L'enregistrement peut se faire notamment, via un site web du fournisseur de services.

Au cours de cet enregistrement, Bob et Alice ont fourni, par l'intermédiaire de leurs terminaux T-B et T-A, des données d'identification et d'authentification. Plus précisément ici, Alice et Bob ont fourni chacun une adresse électronique ou adresse email (identifiant au sens de l'invention) et un mot de passe, ainsi que le nom de domaine DNS (Domain Name System) qualifié désignant leur réseau domestique.

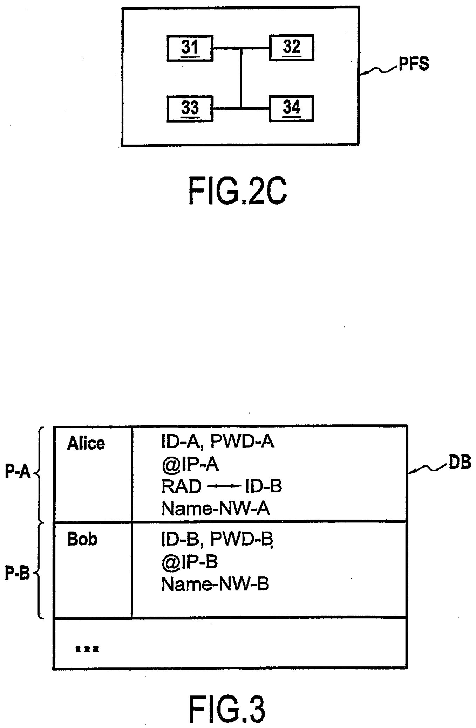

L'adresse email ID-A, le mot de passe PWD-A et le nom Name-NW-A du réseau NW-A d'Alice ont été mémorisés lors de l'enregistrement, dans un profil utilisateur d'Alice, désigné par P-A. Le profil P-A est stocké dans une base de données DB d'authentification du fournisseur de services, représentée sur la **figure 3****.**

Ces données sont en outre associées, dans le profil P-A, à l'adresse IP publique @IP-A de la passerelle HGW-A, extraite par la plateforme PFS des messages envoyés par le terminal T-A lors de l'enregistrement et mis à jour par la passerelle via le protocole DNS Update, tel que spécifié par l'IETF dans le document RFC 2136, connu de l'homme du métier.

De façon similaire, l'adresse email ID-B, le mot de passe PWD-B et le nom Name-NW-B du réseau NW-B de Bob ont été mémorisés dans son profil utilisateur, désigné par P-B, et stocké dans la base de données DB. Ces données sont également associées, dans le profil P-B, à l'adresse IP publique @IP-B de la passerelle HGW-B et mis à jour par la passerelle via le protocole DNS Update.

Conformément à l'invention, la plateforme de services PFS joue un rôle de serveur proxy authentifiant. Dans le mode de réalisation décrit ici, cette fonction est assurée par la plateforme PFS en utilisant le protocole HTTPS (HyperText Transfer Protocol Secure).

De façon connue, le protocole HTTPS met en oeuvre des services d'authentification des parties, à l'aide de certificats d'authentification. Il garantit en outre l'authenticité et la confidentialité des données échangées, en établissant une session chiffrée entre les parties conformément aux protocoles SSL (Secure Socket Layer) ou TLS (Transport Layer Security). Le principe de fonctionnement du protocole HTTPS est connu de l'homme du métier et ne sera pas détaillé davantage ici.

On suppose que les certificats d'authentification nécessaires pour les protocoles SSL/TLS ont été échangés entre les terminaux T-A et T-B et la plateforme PFS, durant l'enregistrement des utilisateurs Alice et Bob.

La plateforme de services PFS a ici l'architecture matérielle d'un ordinateur.

En référence à la **figure 2C****,** elle comprend notamment un processeur 31, une mémoire vive 32, une mémoire morte 33, et des moyens 34 de communication avec les réseaux NW-A et NW-B, connus en soi.

La mémoire morte 33 constitue un support d'enregistrement conforme à l'invention, lisible par le processeur 31 de la plateforme de services PFS et sur lequel est enregistré un programme d'ordinateur conforme à l'invention, comportant des instructions pour l'exécution des étapes d'un procédé de mise en oeuvre d'une interface selon l'invention.

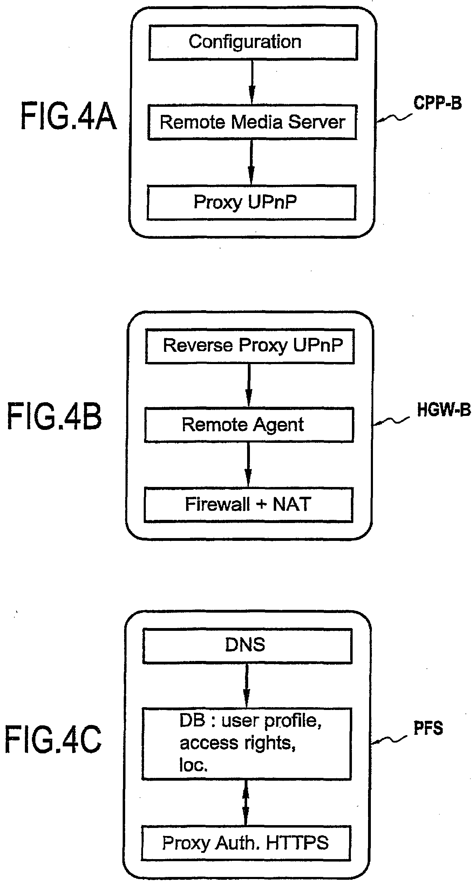

Nous allons maintenant décrire, en référence aux figures 4A-4C, 5, 6A, 6B, et 7, les principales étapes des procédés de contrôle, de mise en oeuvre d'une interface entre les réseaux NW-A et NW-B, de traitement et de transfert conformes à l'invention, dans un mode particulier de réalisation dans lequel ces procédés sont mis en oeuvre par le système 1.

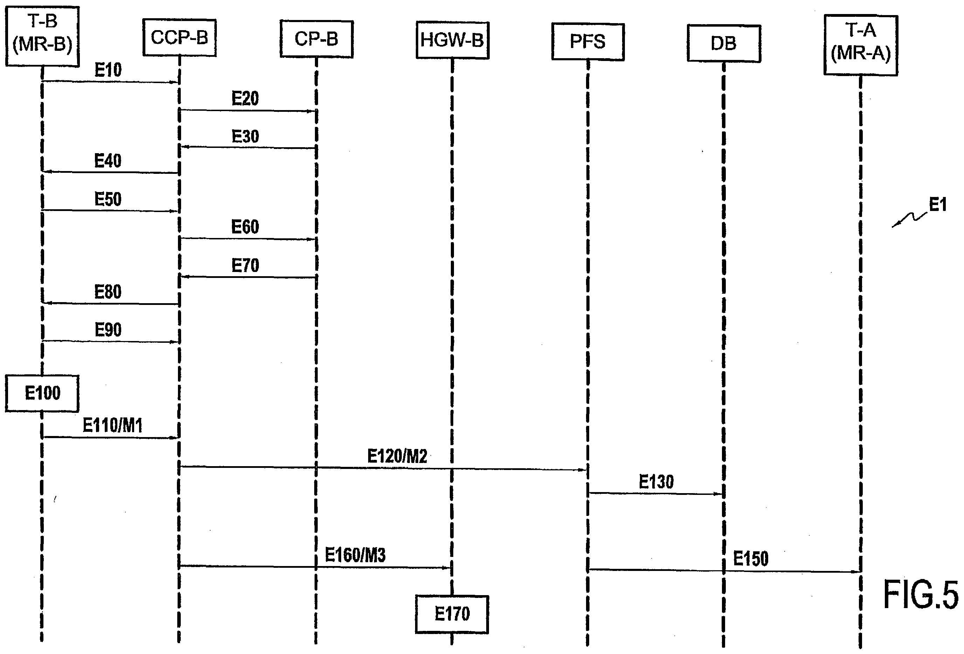

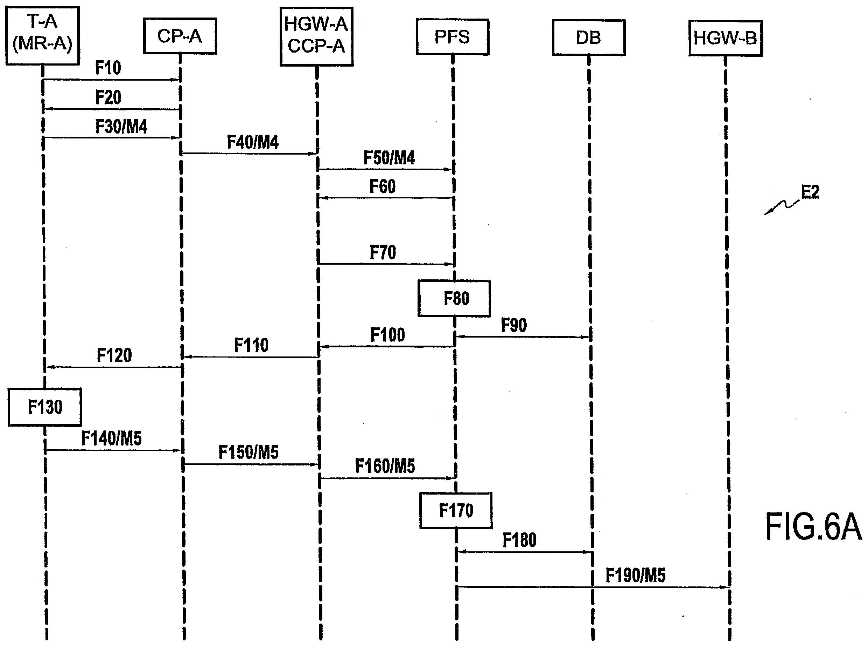

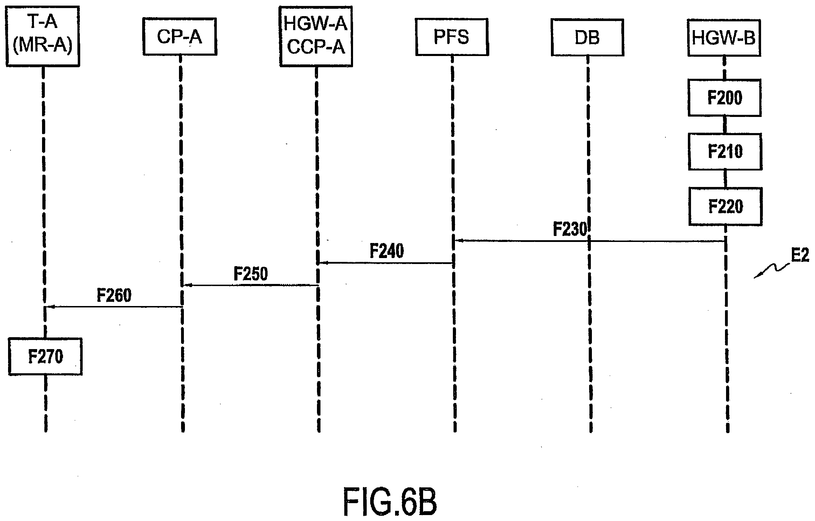

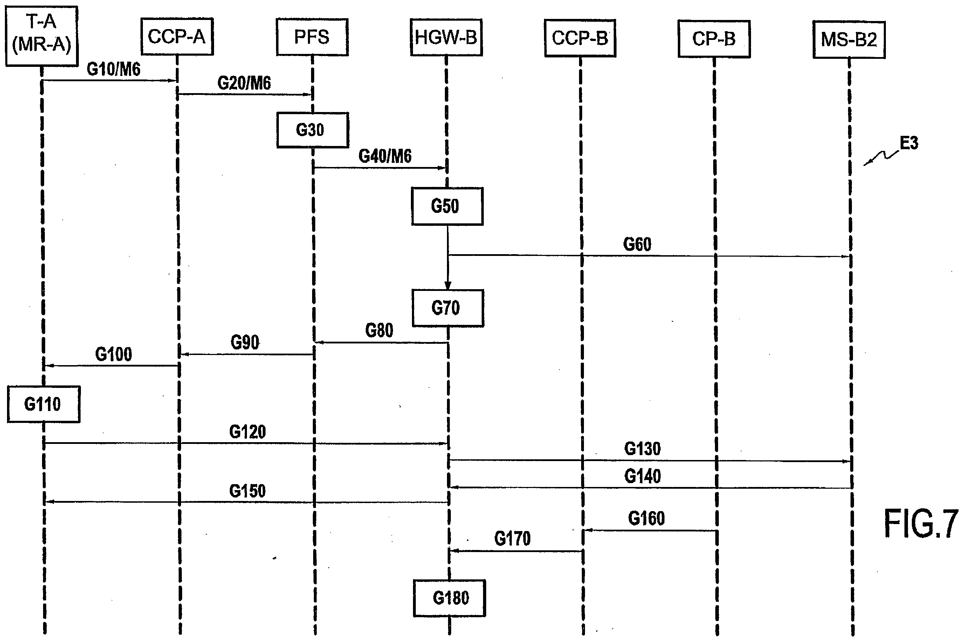

Dans le mode de réalisation décrit ici, on envisage, pour mettre en oeuvre l'invention, trois phases distinctes :
- une première phase E1, au cours de laquelle un partage d'un catalogue (i.e. un ensemble) de contenus multimédia appartenant à Bob, et indexés par les serveurs de contenus MS-B1 et MS-B2, est mis en place avec Alice. Parmi ces contenus, figure notamment le contenu C indexé par le serveur MS-B2. Cette première phase est représentée sur la figure 5 ;
- une deuxième phase E2, au cours de laquelle le catalogue partagé par Bob est consulté par le terminal d'Alice. Cette deuxième phase est représentée sur les figures 6A et 6B ; et
- une troisième phase E3 d'accès au contenu C par le terminal d'Alice. Cette troisième phase est représentée sur la figure 7.

Afin de faciliter la compréhension de l'invention et du rôle joué par chaque entité au cours des phases E1, E2 et E3, les figures 4A, 4B et 4C illustrent les principales fonctions remplies, dans le mode de réalisation décrit ici, par l'entité de confiance PFS, la passerelle domestique HGW-B et le dispositif de contrôle CCP-B.

Bien entendu, les réseaux NW-A et NW-B étant ici de structure identique, ces fonctions sont également remplies par la passerelle HGW-A et le dispositif de contrôle CCP-A. Toutefois, l'exemple décrit ici envisageant le partage par Bob d'un contenu C avec Alice, nous nous focaliserons dans la suite de la description sur la passerelle HGW-B et le dispositif de contrôle CCP-B.

En référence à la **figure 4A****,** le dispositif de contrôle CCP-B assure les fonctions :
- de client de configuration, en définissant des règles d'accès devant être appliquées par la passerelle HGW-B et la plateforme PFS et une ou plusieurs règles de redirection appliquées par la passerelle HGW-B ou lui-même ;
- de proxy UPnP, en transférant les requêtes UPnP vers la plateforme PFS ; et
- de serveur de contenu distant (ou « remote media server » en anglais), en masquant dans un premier temps les serveurs de contenus du réseau NW-B, puis en annonçant dans un second temps un serveur de contenu particulier au terminal T-A, une fois s'être assuré que celui-ci est autorisé à accéder à ce serveur.

Il est ici souligné que lorsque la passerelle HGW-B comprend le dispositif de contrôle CCP-B, la communication entre ces deux entités est interne.

En référence à la **figure 4B****,** la passerelle HGW-B assure les fonctions :
- d'agent distant (ou « remote agent » en anglais), en mettant en oeuvre une configuration de type pare-feu (« firewall ») et une configuration de redirection de port et de translation d'adresses (NAT, « Network Address Translation) ; et
- de proxy UPnP inverse (ou « reverse proxy » en anglais), en appliquant d'une part les règles d'accès et de redirection imposées par le dispositif de contrôle CCP-B, et en transférant d'autre part les requêtes entrantes vers le serveur de contenu dans le réseau domestique.

Lorsque le dispositif de contrôle CCP-B assure la fonction de Proxy UPnP inverse, les règles de redirection restent localisées au niveau du dispositif de contrôle CCP-B.

Enfin, en référence à la **figure 4C****,** la plateforme PFS assure les fonctions :
- de base d'authentification, en procédant à l'enregistrement des utilisateurs, en authentifiant ces utilisateurs, et en stockant les règles d'accès à appliquer ;
- de localisation dynamique des utilisateurs (ou Dynamic DNS), en établissant la correspondance entre un nom de domaine et l'adresse IP de la passerelle HGW-B ; et
- de proxy HTTPS.

Nous allons maintenant décrire les phases E1, E2 et E3 afin d'illustrer ces différentes fonctions remplies par la plateforme PFS, la passerelle HGW-B et le dispositif de contrôle CCP-B.

En référence à la **figure 5****,** au cours de la phase E1, l'utilisateur Bob sélectionne tout d'abord, par l'intermédiaire de son terminai T-B, les contenus multimédias qu'il souhaite partager avec Alice, c'est-à-dire auxquels il souhaite autoriser l'accès à Alice.

A cette fin, le terminal T-B envoie une requête d'interrogation au dispositif de contrôle CCP-B afin d'identifier les serveurs de contenus et les contenus disponibles dans son réseau (étape E10). On notera, que dans le mode de réalisation décrit ici, c'est le dispositif de contrôle CCP-B qui agrège les différents serveurs et contenus que l'utilisateur Bob peut partager.

Sur réception de cette requête, le dispositif de contrôle CCP-B interroge à son tour le point de contrôle CP-B (étape E20), afin qu'il lui fournisse la liste des serveurs UPnP de contenus disponibles.

En effet, de façon connue, le point de contrôle CP-B joue un rôle central dans le protocole UPnP en ce qu'il permet de découvrir les autres dispositifs UPnP du réseau et les services et/ou les contenus offerts par ces dispositifs.

Le point de contrôle CP-B élabore donc la liste des serveurs de contenus disponibles dans le réseau NW-B, et l'envoie dans un message de réponse au dispositif de contrôle CCP-B (étape E30). Dans l'exemple envisagé ici, cette liste identifie le serveur MS-B1 et le serveur MS-B2.

Le dispositif de contrôle CCP-B transfère cette liste au serveur de restitution MR-B du terminal T-B, en réponse à sa requête (étape E40).

Bob, par l'intermédiaire de son terminal T-B, sélectionne un serveur parmi la liste, à savoir ici le serveur MS-B2, et envoie l'identifiant de ce serveur au dispositif de contrôle CCP-B (étape E50).

Sur réception de cet identifiant, le dispositif de contrôle CCP-B interroge le point de contrôle CP-B afin d'obtenir la liste des contenus accessibles sur le serveur MS-B2 (étape E60).

La liste est obtenue par le point de contrôle CP-B selon des moyens connus de l'homme du métier puis envoyée au dispositif de contrôle CCP-B (étape E70). Cette liste comprend notamment ici le contenu C.

Elle est ensuite transférée par le dispositif de contrôle CCP-B au serveur MR-B du terminal T-B (étape E80), afin que Bob sélectionne le ou les contenus qu'il souhaite partager avec Alice.

Sur réception de cette liste, Bob sélectionne, par l'intermédiaire de son terminal T-B, le contenu C ou le répertoire R dans lequel est localisé le contenu C. L'identifiant de ce contenu ou de ce répertoire est transmis par le terminal T-B au dispositif de contrôle CCP-B (étape E90).

On notera qu'en variante, Bob peut sélectionner plusieurs contenus ou répertoires indexés par le serveur MS-B2.

Une fois le répertoire ou le contenu sélectionné, l'utilisateur Bob va l'associer à un catalogue CA. Plusieurs contenus ou répertoires peuvent être associés au même catalogue et un même contenu ou un même répertoire peut être associé à plusieurs catalogues.

Dans une variante de l'invention, des catalogues par défauts sont proposés à l'utilisateur comme par exemple « Photo », « Audio », « Vidéo », « Données ».

L'utilisateur Bob indique ensuite, toujours par l'intermédiaire de son terminal T-B, les utilisateurs auxquels il souhaite autoriser l'accès au catalogue CA, et donc au contenu C ou au répertoire R (étape E100).

Pour cela, il accède à un carnet d'adresses mémorisé par son terminal T-B, et comprenant une liste de contacts. Ces contacts sont identifiés ici par des adresses électroniques. Notamment, Alice est identifiée dans cette liste par son adresse email ID-A.

En variante, d'autres identifiants peuvent être considérés. En outre, le carnet d'adresses dans lequel Bob sélectionne l'adresse d'Alice peut ne pas être stocké sur le terminal T-B, mais être obtenu par exemple de la plateforme de services PFS.

Le terminal T-B envoie, dans un message M1, l'identifiant ID-A d'Alice au dispositif de contrôle CCP-B en association avec le catalogue CA, les identifiants UPnP (ou UUID pour Universal Unique IDentifier) du contenu C ou du répertoire R et du serveur MS-B2 (étape E110). Le message M1 est envoyé sous la forme d'une requête HTTP.

Bob autorise ainsi, par le biais du message M1, un utilisateur du réseau NW-A utilisant l'identifiant ID-A à accéder au catalogue CA référençant le contenu C ou le répertoire R indexé par le serveur MS-B2. L'association de l'adresse ID-A et des identifiants du contenu C ou du répertoire R et du serveur MS-B2 au sein du catalogue CA dans le message M1 constitue une règle d'accès RA au sens de l'invention.

On notera que, de façon équivalente, la règle d'accès RA peut être transmise au dispositif de contrôle CCP-B par le biais d'une succession de messages : par exemple, un message contenant l'identifiant du serveur MS-B2, un message contenant l'identifiant du contenu C ou du répertoire R, un message contenant l'identifiant du catalogue CA et un message contenant l'identifiant ID-A. Cette succession de messages constitue un message contenant une règle d'accès au sens de l'invention.

Sur réception de la requête M1, le dispositif de contrôle CCP-B envoie à la plateforme PFS, un message de notification M2 contenant une règle d'accès distante RAD associant l'identifiant ID-A d'Alice à l'identifiant ID-B de Bob (étape E120).

La règle d'accès distante RAD est dérivée de la règle d'accès RA : selon cette règle d'accès distante, Alice est autorisée à accéder à des contenus ou plus généralement à des catalogues de contenus de Bob.

La plateforme de service PFS met alors à jour la base de données d'authentification DB en insérant dans le profil utilisateur P-A la règle de partage RAD extraite du message M2, en association avec l'identifiant ID-B de Bob (étape E130).

La plateforme de service PFS signale ensuite au terminal T-A que Bob a autorisé l'accès à Alice au contenu C (étape E150), par exemple par le biais d'un email envoyé en utilisant l'identifiant ID-A. Cette étape est bien entendu optionnelle.

Le dispositif de contrôle CCP-B envoie, dans le même temps, un message M3 de notification à la passerelle HGW-B, contenant une règle d'accès locale RAL dérivée de la règle d'accès RA, ainsi qu'une règle de redirection RR1 devant être appliquée par la passerelle (étape E160).

La règle d'accès locale RAL contenue dans le message M3 vise à configurer la passerelle pour qu'elle renvoie le catalogue CA lorsqu'elle reçoit une demande d'interrogation du catalogue en provenance de l'utilisateur Alice (c'est-à-dire associée à l'identifiant ID-A d'Alice), par l'intermédiaire de la plateforme de services PFS.

La règle de redirection RR1 associée à la règle d'accès locale RAL pour le catalogue CA vise à configurer la passerelle pour qu'elle transfère, vers le serveur de contenus MS-B2, toute requête de parcours du catalogue CA afin d'accéder au contenu C ou de parcourir le répertoire R, qu'elle reçoit d'Alice via la plateforme de services PFS.

En outre, toujours selon la règle d'accès locale RAL, la passerelle HGW-B est configurée de sorte à rejeter toute requête relative à un contenu du réseau NW-B, qui ne proviendrait pas de la plateforme PFS. La détection de la provenance de la requête peut être mise en oeuvre, de façon connue en soi, en examinant les adresses IP contenues dans la requête et en les comparant à l'adresse IP publique de la plateforme PFS, contenue dans la règle de redirection RR1.

En variante, une règle statique peut également être configurée dans la passerelle domestique à l'initialisation du service, afin de n'autoriser que les requêtes en provenance de la PFS.

On notera, que par le biais de cette configuration, la plateforme de services PFS joue le rôle d'un tiers de confiance pour le réseau NW-B.

La passerelle HGW-B met à jour sa configuration de proxy inverse à l'aide de la règle de redirection RR1 extraite du message M3, selon des moyens connus de l'homme du métier et non décrit ici (étape E170). Ainsi, suite à cette étape, la passerelle HGW-B applique à toute requête d'accès relative au contenu C ou au répertoire R la règle de redirection RR1.

La passerelle HGW-B stocke par ailleurs la règle d'accès RAL, et la règle de redirection RR1 dans une mémoire non volatile (par exemple dans une mémoire flash).

Cette configuration de la passerelle HGW-B clôture la phase E1 de sélection par Bob d'un catalogue d'un ou de plusieurs contenus ou répertoires à partager.

En référence à la figure 6A, commence alors la phase E2 de consultation par Alice, des contenus auxquels elle peut accéder.

Le terminal T-A envoie une requête d'interrogation au point de contrôle CP-A afin d'obtenir la liste des serveurs de contenus disponibles (étape F10).

Cette liste est envoyée par le point de contrôle CP-A au serveur de restitution MR-A du terminal T-A (étape F20). Parmi cette liste figurent notamment les serveurs de contenus MS-A1 et MS-A2 hébergés dans le réseau local NW-A mais également un serveur de contenus distant MS-D.

Le serveur de contenus distant MS-D symbolise l'ensemble des serveurs et/ou contenus localisés à distance et accessibles à partir du réseau NW-A. Toutefois, le détail et la localisation précise de ces serveurs et/ou contenus sont masqués pour le terminal T-A : ils apparaissent sous la forme d'un serveur distant unique MS-D. Ainsi, les serveurs MS-B1 et MS-B2 ainsi que leurs contenus ne sont pas annoncés et identifiés en tant que tels auprès des équipements du réseau NW-A.

Le terminal T-A sélectionne le serveur de contenus distant MS-D via le serveur de restitution MR-A, et envoie une requête d'interrogation M4 au point de contrôle CP-A, pour consulter les contenus disponibles sur le serveur distant MS-D (étape F30).

Le point de contrôle CP-A transfère cette requête d'interrogation M4 au dispositif de contrôle CCP-A (étape F40).

Conformément à l'invention, le dispositif de contrôle CCP-A est configuré de sorte à transférer à la plateforme de service PFS, toute requête en provenance d'un utilisateur du réseau NW-A relative à au moins un catalogue ou à un contenu multimédia hébergé dans le réseau NW-B.

Dans un mode de réalisation possible, cette redirection est assurée automatiquement en configurant le dispositif de contrôle CCP-A pour qu'il utilise un proxy http de la plateforme de service PFS. Cette configuration, similaire à celle d'un navigateur WEB, est connue de l'homme du métier.

La requête d'interrogation M4 constituant une telle requête, le dispositif de contrôle CCP-A la transfère à la plateforme PFS (étape F50), en vue d'obtenir un catalogue de contenus multimédia hébergés dans le réseau NW-B auxquels Alice est autorisé à accéder.

Sur réception de la requête M4, la plateforme PFS authentifie l'utilisateur à l'origine de la requête. Cette authentification d'Alice auprès la plateforme PFS est gérée de façon transparente par le dispositif de contrôle CCP-A pour le compte d'Alice et ce, indépendamment du terminal utilisé par Alice. Autrement dit, cette authentification ne requiert avantageusement aucune interaction avec le terminal T-A d'Alice.

Plus précisément, à cette fin, la plateforme de service PFS envoie une requête au dispositif de contrôle CCP-A afin d'obtenir un identifiant d'Alice et un mot de passe associé (étape F60).

Le dispositif de contrôle CCP-A fournit en réponse à la plateforme PFS, l'identifiant ID-A ainsi que le mot de passe PWD-A (étape F70), sous forme d'une requête HTTPS, afin que celle-ci puisse procéder à l'authentification d'Alice.

Sur réception de ces données, la plateforme PFS authentifie Alice par l'intermédiaire du dispositif de contrôle CCP-A en vérifiant que l'identifiant ID-A et le mot de passe PWD-A correspondent bien aux données d'identification et d'authentification enregistrées dans le profil de l'utilisateur A, dans la base de données DB (étape F80).

Si ce n'est pas le cas, la plateforme PFS envoie une notification d'erreur au dispositif de contrôle CCP-A, rejetant ainsi l'accès de l'utilisateur identifié par ID-A au réseau NW-B. Cette notification est retransmise par le dispositif CCP-A au terminal T-A.

Dans l'exemple décrit ici, l'identifiant ID-A et le mot de passe PWD-A correspondent aux données enregistrées dans le profil P-A de sorte que la plateforme de service authentifie valablement le dispositif de contrôle CCP-A.

Suite à cette authentification, elle interroge la base de données DB pour connaître la liste des correspondants qui acceptent de partager des contenus avec l'identifiant ID-A, autrement dit avec l'utilisateur Alice (étape F90).

Cette liste peut être élaborée en analysant les règles d'accès distantes associées à l'identifiant ID-A (c'est-à-dire à l'utilisateur Alice), dans la base DB. Dans l'exemple envisagé ici, seul l'utilisateur Bob identifié par son identifiant ID-B accepte de partager des contenus avec Alice, par l'intermédiaire de la règle d'accès distante RAD.

La plateforme PFS envoie, sous la forme d'un fichier XML au format UPnP, la liste constituée de l'identifiant ID-B au dispositif de contrôle CCP-A (étape F100).

Dans une variante de réalisation, la plateforme PFS envoie également le nom DNS Name-NW-B du réseau NW-B associé à l'identifiant ID-B.

Cette liste est transférée par le dispositif de contrôle CCP-A au point de contrôle CP-A (étape F110), qui la transfère à son tour au serveur de restitution MR-A du terminal T-A (étape F120).

Alice visualise sur le serveur de restitution MR-A la liste des correspondants acceptant de partager des contenus avec elle, à savoir ici Bob.

Elle sélectionne par le biais de son terminal T-A l'identifiant ID-B de Bob (étape F130). Puis Alice envoie, par le biais de son terminal T-A, une requête M5 au point de contrôle CP-A afin d'obtenir la liste des contenus partagés par Bob (étape F140).

Cette requête M5 est transférée par le point de contrôle CP-A au dispositif de contrôle CCP-A (étape F150). La requête M5 est une requête en provenance d'un utilisateur du réseau NW-A relative à un catalogue ou à au moins un contenu multimédia hébergé dans le réseau NW-B au sens de l'invention.

Par conséquent, conformément à sa configuration, le dispositif de contrôle CCP-A transmet à son tour la requête M5, sous forme d'une requête HTTPS, à la plateforme PFS (étape F160).

Comme précédemment, la plateforme de service PFS, sur réception de la requête M5, authentifie utilisateur à l'origine de la requête en interrogeant le dispositif de contrôle CCP-A (étape F170). Cette nouvelle authentification est menée de façon similaire à l'authentification réalisée aux étapes F60-F80, c'est-à-dire de façon transparente pour le terminal T-A d'Alice.

Dans une variante de l'invention, la plateforme de service PFS peut gérer des états et ainsi mémoriser la première authentification d'Alice réalisée par l'intermédiaire du dispositif de contrôle CCP-A lors des étapes F60-F80 de sorte à ne pas redemander d'authentification. Cette procédure peut être réalisée à l'aide de « cookies » et est connue de l'homme du métier.

Une fois le dispositif de contrôle CCP-A authentifié (autrement dit, une fois Alice authentifié), la plateforme de service PFS vérifie en outre si Alice bénéficie d'une règle d'accès distante à des contenus de Bob (étape F180).

A cette fin, elle interroge de nouveau la base de données DB à l'aide de l'identifiant ID-B.

En cas d'échec de l'authentification ou si la plateforme PFS détermine qu'Alice n'a pas le droit d'accéder à des contenus de Bob, la requête est rejetée et une notification d'erreur est envoyée au dispositif de contrôle CCP-A qui la relaie jusqu'au terminal T-A via le point de contrôle CP-A.

Dans l'exemple décrit ici, l'utilisateur utilisant l'identifiant ID-A est bien autorisé à accéder à des contenus de Bob par la règle d'accès distante RAD.

La plateforme de service PFS transfère donc la requête M5 vers la passerelle HGW-B (étape F190), dont elle obtient l'adresse IP en consultant le profil de Bob dans la base DB.

Dans une variante de l'invention, la plateforme PFS obtient l'adresse IP de la passerelle HGW-B en consultant le système DNS à l'aide du nom Name-NW-B du réseau NW-B mémorisé dans la base DB et associé à l'identifiant ID-B.

Elle insère en outre dans la requête M5 transférée l'identifiant ID-A utilisé par le dispositif de contrôle CCP-A pour authentifier Alice.

Comme mentionné précédemment, la passerelle HGW-B est configurée par la règle d'accès locale RAL de sorte à accepter les requêtes HTTPS relatives à un contenu du réseau NW-B, uniquement en provenance de la plateforme PFS.

Ainsi, en référence à la figure 6B, sur réception de la requête M5, la passerelle HGW-B vérifie dans un premier temps que cette requête provient bien de la plateforme PFS (étape F200). Pour cela, elle extrait l'adresse IP de la plateforme PFS contenue, de façon connue en soi, dans la requête M5, et la compare à l'adresse IP spécifiée dans la règle de redirection RR1.

Dans l'exemple envisagé ici, les deux adresses IP coïncident.

La passerelle extrait alors de la requête M5, l'identifiant ID-A d'Alice utilisé par le dispositif de contrôle CCP-A afin de vérifier qu'il est bien autorisé, par une règle d'accès locale RAL, à accéder à un contenu du réseau de Bob (étape F210). De cette sorte on évite toute usurpation d'identité par un terminal malveillant qui aurait réussi à se procurer l'adresse IP de la plateforme PFS.

On notera que si l'Identifiant ID-A extrait de la requête M5 ne correspond pas à un identifiant autorisé par une règle d'accès locale mémorisée dans la mémoire 22, la passerelle HGW-B envoie une notification d'erreur à la plateforme de services.

Dans l'exemple décrit ici, l'identifiant ID-A est autorisé à accéder à des contenus de Bob par la règle d'accès locale RAL.

La passerelle HGW-B va alors construire dynamiquement le catalogue CA des contenus auxquels Bob autorise l'accès par Alice (étape F220), à l'aide de la règle d'accès locale RAL mémorisée dans sa mémoire 22 lors de l'étape E170.

Ce catalogue CA, qui contient ici seulement la référence au contenu C, est alors envoyé par la passerelle HGW-B sous la forme d'un fichier XML au format UPnP, à la plateforme PFS (étape F230). Ce fichier est inclus dans un message HTTPS.

La plateforme de service PFS transmet ce catalogue au dispositif de contrôle CCP-A (étape F240), qui à son tour le relaie vers le point de contrôle CP-A (étape F250) pour transmission au serveur de restitution MR-A (étape F260).

Alice, par l'intermédiaire de son terminal T-A, choisit alors le contenu C dans le catalogue CA qui lui est fourni (étape F270).

On notera que lorsque le catalogue CA comprend plusieurs répertoires, la procédure de parcours d'un répertoire est identique à la procédure de parcours d'un catalogue sauf que la requête d'Alice, lorsqu'elle arrive à la passerelle HGW-B, est redirigée vers le serveur de contenus MS-B2 en vertu de la règle de redirection RR1 appliquée par la passerelle HGW-B.

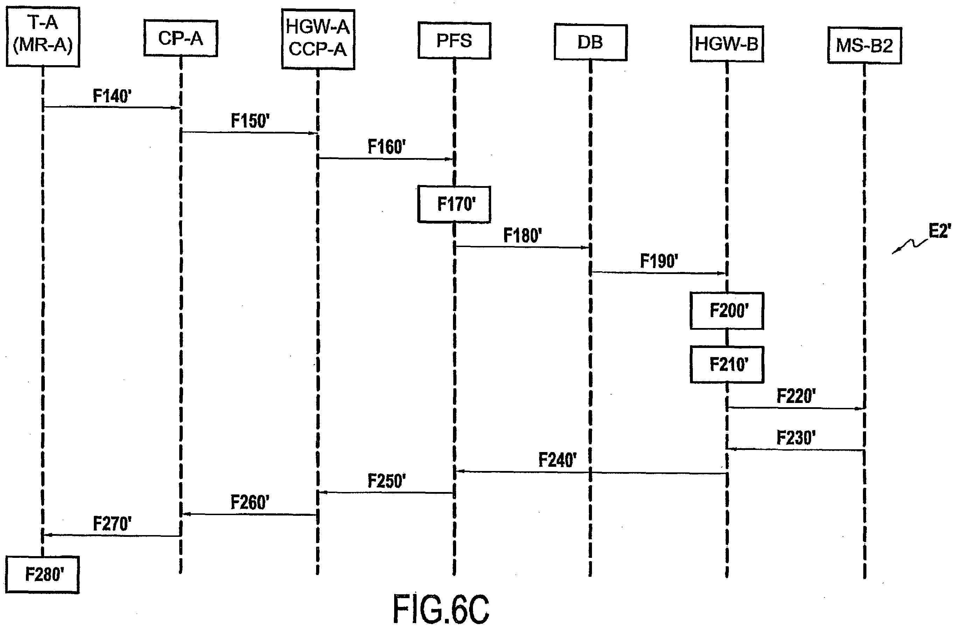

La figure 6C illustre un exemple de procédure de parcours d'un répertoire R du catalogue CA. Les étapes :
- F140' d'envoi d'une requête M5' au point de contrôle CP-A afin de parcourir un répertoire R du catalogue CA,
- F150' de transfert de cette requête au dispositif CCP-A,
- F160' de transfert de cette requête par le dispositif de contrôle CCP-A à la plateforme de services PFS,
- F170' d'authentification menée par la plateforme de services PFS,
- F180' de vérification qu'Alice est autorisée par une règle d'accès distante à accéder au répertoire de Bob,
- F190' de transfert de la requête M5' vers la passerelle HGW-B,
- F200' de vérification par la passerelle HGW-B que la requête M5' provient bien de la plateforme PFS,
- F210' de vérification qu'Alice est autorisé par une règle d'accès locale à accéder à un contenu du réseau de Bob,
sont similaires aux étapes F140 à F210 décrites précédemment.

Comme mentionné précédemment, conformément à la règle de redirection RR1, la passerelle HGW-B est configurée de sorte à transférer vers le serveur de contenus MS-B2 toute requête de parcours d'un répertoire R du catalogue CA qu'elle reçoit d'Alice via la plateforme de services PFS.

La requête M5' constituant une telle requête, la passerelle HGW-B transfère la requête M5' au serveur MS-B2 (étape F220').

En réponse à la requête M5', le serveur MS-B2 renvoie à la passerelle HGW-B le répertoire R (étape F230').

Ce répertoire R est alors envoyé par la passerelle HGW-B sous la forme d'un fichier XML au format UPnP, à la plateforme PFS (étape F240'). Ce fichier est inclus dans un message HTTPS.

La plateforme de service PFS transmet ce répertoire au dispositif de contrôle CCP-A (étape F250'), qui à son tour le relaie vers le point de contrôle CP-A (étape F260') pour transmission au serveur de restitution MR-A (étape F270').

Récursivement, les étapes F140' à F270' permettent de parcourir des sous-répertoires à l'intérieure du répertoire R au sein du catalogue CA.

Alice, par l'intermédiaire de son terminal T-A, choisit alors le contenu C dans le répertoire R qui lui est fourni (étape F280').

La sélection du contenu C par Alice par l'intermédiaire de son terminal T-A dans le catalogue CA ou dans le répertoire R du catalogue CA marque la fin de la phase E2.

En référence à la figure 7, une fois le contenu C sélectionné, Alice demande, à partir de son terminal T-A, à accéder au contenu C, autrement dit ici, à le visualiser. La requête M6 d'accès au contenu C du terminal T-A est envoyée au dispositif de contrôle CCP-A (étape G10), qui fait suivre à la plateforme de services PFS (étape G20).

Sur réception de la requête d'accès M6, la plateforme PFS authentifie de nouveau l'utilisateur à l'origine de la requête (c'est-à-dire Alice) et vérifie qu'une règle d'accès au contenu C lui est associée, comme décrit précédemment lors de la phase E2 (étape G30). En cas d'échec de l'authentification ou si la plateforme PFS détermine qu'Alice n'a pas le droit d'accéder au contenu C, la requête est rejetée et une notification d'erreur est envoyée au dispositif de contrôle CCP-A qui la relaie jusqu'au terminal T-A via le point de contrôle CP-A.

Dans une variante de l'invention, et comme pour l'étape F170, l'authentification peut-être mémorisée lors des étapes F60-F80 de sorte à ne pas être redemandée.

Une fois Alice authentifiée, la plateforme de services PFS transfère la requête M6 vers le réseau domestique de Bob, autrement dit vers la passerelle HGW-B (étape G40).

La passerelle HGW-B contrôle la requête en vérifiant d'une part si elle provient de la plateforme PFS (de façon similaire à l'étape F200), et d'autre part si elle concerne un identifiant pour lequel une règle d'accès locale au contenu C existe, comme décrit précédemment lors de la phase E2 (étape G50).

Dans l'exemple décrit ici, une telle règle existe, autrement dit, l'utilisateur identifié par ID-A est autorisé à accéder au contenu C indexé par le serveur MS-B2.

La passerelle HGW-B transfère alors la requête M6 au serveur de contenus MS-B2 conformément à la règle de redirection RR1 (étape G60). Si aucune règle d'accès autorisant Alice à accéder au contenu C n'existe, la requête M6 est rejetée par la passerelle.

En outre, dans le mode de réalisation décrit ici, la passerelle HGW-B, par l'intermédiaire de sa fonction d'agent distant, se met à jour dynamiquement avec une nouvelle règle de redirection RR2, selon laquelle les requêtes d'accès au contenu C provenant.du réseau NW-A authentifié par l'entremise du dispositif de contrôle CCP-A sont redirigées directement vers le serveur de contenus MS-B2 (étape G70).

Dans l'exemple envisagé ici, cette règle de redirection utilise l'adresse IP de la passerelle HGW-A par laquelle transitent toutes les requêtes à destination d'un réseau extérieur au réseau NW-A, et que la passerelle HGW-A insère dans les requêtes de façon connue de l'homme du métier.

Dans une variante de l'invention, l'adresse IP peut être insérée par le dispositif de contrôle CCP-A ou la plateforme de service PFS dans la requête M6.

Dans une autre variante de l'invention, l'adresse IP peut-être obtenue à partir d'une requête DNS portant sur le nom NAME-NW-A du premier réseau NW-A lui-même inséré par le dispositif de contrôle CCP-A ou la plateforme de service PFS dans la requête M6.

Puis la passerelle HGW-B envoie un message de redirection à destination d'Alice via le dispositif de contrôle du CCP-A (ex. « http redirect ») indiquant son adresse IP publique, @IP-B, ainsi que le port sur lequel les requêtes d'Alice doivent être envoyés pour accéder au contenu C. Ce message a pour but de permettre au terminal T-A d'accéder directement à la passerelle HGW-B sans passer par la plateforme PFS.

Ce message de redirection transite par la plateforme de services PFS (étape G80), et par le dispositif de contrôle CCP-A (étape G90) avant d'arriver au terminal T-A (étape G100).

A la réception de ce message de redirection, le terminal T-A extrait l'adresse IP publique @IP-B du réseau NW-B ainsi que le port demandé par la passerelle HGW-B (étape G110).

Il envoie ensuite directement, à l'aide de ces paramètres, une requête d'accès au contenu C au réseau NW-B, plus précisément à la passerelle HGW-B, qui la transmet selon la règle de redirection RR2 au serveur MS-B2 (étapes G120 et G130). Ce dernier la renvoie à son tour le contenu C au terminal T-A (étapes G140 et G150).

Une fois l'accès au contenu C terminé, le point de contrôle CP-B le signale au dispositif de contrôle CCP-B (étape G160).

Le dispositif de contrôle CCP-B envoie alors un message à la passerelle HGW-B lui demandant de supprimer la règle de redirection RR2 au niveau de la passerelle (étape G170).

La passerelle HGW-B supprime la règle de redirection RR2 (étape G180), de sorte que l'accès direct au réseau NW-B par un terminal du réseau distant NW-A n'est maintenant plus possible.

Afin de s'assurer que la règle de redirection RR2 est bien supprimée dans tous les cas, y compris en cas d'erreur, le dispositif de contrôle CCP-B utilise une temporisation et la passerelle HGW-B ou le dispositif de contrôle CCP-B effectuent un suivi de connexion pour surveiller l'échange de contenu entre les deux réseaux locaux distants et mettre fin à la règle de redirection RR2 en cas de détection d'une erreur.

Dans le mode de réalisation envisagé, le dispositif de contrôle CCP-B arme une temporisation pour la session en cours. A la fin de la période définie par la temporisation, le dispositif de contrôle CCP-B envoie un message à la passerelle HGW-B lui demandant de supprimer la règle de redirection RR2. Un message de déconnexion est envoyé par le dispositif de contrôle CCP-B au dispositif de contrôle CCP-A pour indiquer à l'utilisateur à qui le contenu C est restitué que la session est terminée.

Dans le mode de réalisation envisagé, et en complément de cette temporisation afin d'être au plus prêt de l'utilisation du service par l'utilisateur, les passerelles HGW ou les dispositifs de contrôle CCP effectuent un suivi de connexion. Ceci permet de valider la bonne connexion entre les deux réseaux locaux distants et l'absence de perte de messages, une détection de perte nécessitant d'augmenter la temporisation. Le suivi de connexion permet d'utiliser des valeurs de temporisation plus courtes qui sont rafraîchies régulièrement tant que le suivi de connexion n'a pas détecté une rupture dans les échanges. En cas d'erreur, respectivement, la passerelle HGW-B (ou le dispositif de contrôle CCP-B) supprime automatiquement la règle de redirection RR2 et envoie un message au dispositif de contrôle CCP-B pour l'avertir de la fin de la session. La passerelle HGW-A envoie un message au dispositif de contrôle CCP-A afin qu'il avertisse le terminal T-A de la fin d'accès au contenu C.

Dans le mode de réalisation envisagé, le protocole UPnP étant lui-même transporté par le protocole HTTP, ce dernier est utilisé par l'ensemble des équipements multimédias du réseau local utilisant le protocole UPnP. La passerelle domestique et le dispositif de contrôle utilisent le protocole HTTP pour les communications et les échanges de messages au sein du réseau local et le protocole HTTPS pour les communications et les échanges avec la plateforme de service PFS. Le passage du protocole HTTP vers et depuis le protocole HTTPS est assuré par la passerelle domestique HGW ou le dispositif de contrôle CCP.

Dans un mode de réalisation moins sécurisé, seul le protocole HTTP est utilisé.

Dans le mode de réalisation envisagé ici, les entités UPnP des réseaux NW-A et NW-B (incluant notamment les terminaux, les dispositifs de contrôle et les passerelles) forment un réseau domestique. Toutefois, l'invention s'applique également lorsque ces entités sont colocalisées sur un même équipement (qui constituera alors à lui seul un réseau au sens de l'invention), tel que par exemple un ordinateur portable UPnP en situation de nomadisme, équipé d'un modem routeur conforme à un standard de télécommunications mobile de troisième génération (par exemple UMTS) ou équipée d'une interface WiFi, faisant office de passerelle d'accès au réseau de l'entité de confiance via un réseau de télécommunication mobile de troisième génération ou un « hotspot » Wifi.

La description a été effectuée pour un service A/V utilisant le protocole UPnP. Elle est également applicable à tout autre protocole, normalisé ou non, tel que le protocole propriétaire « Bonjour » développé par la société Apple.

## Revendications

1. Procédé de contrôle mis en oeuvre par un dispositif de contrôle (CCP-B) d'un premier réseau (NW-B), comprenant :
- une étape (E110) de réception d'un message (M1), émis par un utilisateur (T-B) du premier réseau, ledit message contenant une règle d'accès autorisant un utilisateur d'un second réseau à accéder à au moins un contenu multimédia (C), ledit contenu étant indexé auprès d'un serveur de contenus (MS-B2) du premier réseau ;
- une étape d'envoi (E120), à une entité de confiance (PFS) gérant l'interface entre le premier réseau (NW-B) et le second réseau (NW-A), d'un premier message (M2) de notification contenant une règle d'accès distante (RAD) autorisant un accès dudit utilisateur du second réseau à des contenus multimédia dudit utilisateur du premier réseau ; et
- une première étape de commande (E160) d'une passerelle (HGW-B) du premier réseau (NW-B) au moyen d'une règle d'accès locale configurant ladite passerelle, de sorte que ladite passerelle transmet un catalogue de contenus auxquels ledit utilisateur du second réseau est autorisé à accéder sur réception d'une requête d'accès relative audit catalogue en provenance dudit utilisateur du second réseau par l'intermédiaire de ladite entité de confiance (PFS).

2. Procédé de contrôle selon la revendication 1 dans lequel la première étape de commande (E160) comprend un envoi d'un second message de notification (M3), ledit second message comprenant ladite règle d'accès locale et une règle de redirection selon laquelle la passerelle transfère vers un serveur de contenus (MS-B2) une requête d'accès à un contenu déterminé reçue.

3. Procédé de contrôle selon la revendication 1 comprenant en outre :
- une étape d'envoi (E40) à l'utilisateur (T-B) du premier réseau d'une liste comprenant au moins un serveur de contenus du premier réseau indexant des contenus multimédia ; et
- sur réception (E50) d'une sélection par l'utilisateur du premier réseau d'un serveur (MS-B2) de ladite liste, une étape d'envoi (E60) à celui-ci d'une liste des contenus multimédia indexés auprès de ce serveur, pour sélection d'au moins un contenu multimédia (C) auquel il autorise un utilisateur du second réseau à accéder.

4. Procédé de contrôle selon la revendication 1 comprenant en outre :
- une étape de détection (G160) de la fin d'un accès à un contenu multimédia (C) par l'utilisateur du second réseau (T-A) ; et
- une deuxième étape de commande configurant ladite passerelle (G170) de sorte à désactiver une règle de redirection appliquée par ladite passerelle et selon laquelle celle-ci transfère au serveur (MS-B2) indexant le contenu multimédia (C), une requête d'accès à ce contenu reçue d'un utilisateur du second réseau (T-A).

5. Procédé de traitement, mis en oeuvre par une passerelle (HGW-B) d'un premier réseau (NW-B), ledit procédé comprenant :
- une étape de configuration (E170) du premier réseau, au moyen d'une règle d'accès locale reçue d'un dispositif de contrôle (CCP-B) du premier réseau, et configurant ladite passerelle de sorte que, sur réception d'une requête d'accès relative à un catalogue de contenus multimédias d'un utilisateur du premier réseau en provenance d'un utilisateur d'un second réseau par l'intermédiaire d'une entité de confiance (PFS) s'interfaçant entre le premier réseau et le second réseau, ladite passerelle transmet ledit catalogue de contenus multimédia, auxquels ledit utilisateur du second réseau est autorisé à accéder ;
- sur réception (F190) d'une requête (M5) d'accès audit catalogue de contenus en provenance dudit utilisateur du second réseau, une étape de vérification (F210) visant à contrôler que ledit utilisateur du second réseau est autorisé à accéder audit catalogue ;
- si ledit utilisateur du second réseau est autorisé :
o une étape d'obtention (F220) du catalogue ;
∘ une étape d'envoi (F230) de ce catalogue à ladite entité de confiance (PFS) ;
- sinon une étape de rejet de la requête.

6. Procédé de traitement selon la revendication 5 dans lequel l'étape de configuration est mise en oeuvre sur réception d'un message de notification (M3) comprenant la règle d'accès locale et une règle de redirection selon laquelle la passerelle transfère vers un serveur de contenus (MS-B2) une requête d'accès à un contenu déterminé (C) reçue.

7. Procédé de traitement selon la revendication 5 comprenant en outre :
- une étape de reconfiguration (G70) de ladite passerelle à l'aide d'une règle de redirection selon laquelle ladite passerelle accepte une requête d'accès à un contenu multimédia (C) reçue d'un utilisateur du second réseau et la transfère vers ledit serveur (MS-B2) indexant ledit contenu ;
- une étape d'envoi (G80) d'une adresse IP (@IP-B) de ladite passerelle à destination de l'utilisateur du second réseau via l'entité de confiance.

8. Procédé de transfert, mis en oeuvre par un dispositif de contrôle (CCP-A) d'un premier réseau (NW-A), comprenant :
- sur réception (F150) d'une requête d'accès (M5) d'un utilisateur (T-A) du premier réseau relative à au moins un contenu multimédia d'un utilisateur d'un second réseau (NW-B) auxquels ledit utilisateur du premier réseau est autorisé à accéder par une règle d'accès, une étape d'interrogation (F160) d'une entité de confiance (PFS) s'interfaçant entre le premier réseau et le second réseau, en vue d'obtenir un catalogue de contenus;
- une étape de transfert (G20) d'une requête d'accès (M6) à un contenu multimédia (C) sélectionné par l'utilisateur parmi ledit catalogue, en provenance de l'utilisateur (T-A) du premier réseau vers l'entité de confiance (PFS).

9. Dispositif de contrôle (CCP-B) d'un premier réseau (NW-B), comprenant :
- des moyens de réception d'un message (M1), émis par un utilisateur (T-B) du premier réseau, ledit message contenant une règle d'accès autorisant un utilisateur d'un second réseau à accéder à au moins un contenu multimédia (C), ledit contenu étant indexé auprès d'un serveur de contenus (MS-B2) du premier réseau ;
- des moyens d'envoi, à une entité de confiance (PFS) s'interfaçant entre le premier réseau (NW-B) et le second réseau (NW-A), d'un premier message (M2) de notification contenant une règle d'accès distante autorisant un accès d'un utilisateur du second réseau à des contenus multimédia d'un utilisateur du premier réseau ; et
- des moyens de commande d'une passerelle (HGW-B) du premier réseau (NW-B) au moyen d'une règle d'accès locale configurant ladite passerelle, de sorte que ladite passerelle transmet un catalogue de contenus auxquels un utilisateur du second réseau est autorisé à accéder sur réception d'une requête d'accès relative audit catalogue en provenance dudit utilisateur du second réseau par l'intermédiaire de ladite entité de confiance (PFS).

10. Passerelle (HGW-B) d'un premier réseau (NW-B), comprenant :
- des moyens de configuration du premier réseau, au moyen d'une règle d'accès locale reçue d'un dispositif de contrôle (CCP-B) du premier réseau, adaptés à configurer ladite passerelle de sorte que, sur réception d'une requête d'accès relative à un catalogue de contenus multimédias d'un utilisateur du premier réseau en provenance d'un utilisateur d'un second réseau par l'intermédiaire d'une entité de confiance (PFS) s'interfaçant entre le premier réseau et le second réseau, ladite passerelle transmet ledit catalogue de contenus multimédias, auxquels ledit utilisateur du second réseau est autorisé à accéder ;
- des moyens de vérification, activés sur réception d'une requête (M5) d'accès audit catalogue de contenus en provenance d'un utilisateur du second réseau, et visant à contrôler que ledit utilisateur du second réseau est autorisé à accéder audit catalogue ;
- des moyens, activés si ledit utilisateur du second réseau est autorisé :
∘ d'obtention du catalogue ; et
∘ d'envoi de ce catalogue à ladite entité de confiance (PFS) ;
- des moyens, activés sinon, de rejet de la requête.

11. Dispositif de contrôle (CCP-A) d'un premier réseau (NW-A), comprenant :
- des moyens, activés sur réception d'une requête d'accès (M5) d'un utilisateur (T-A) du premier réseau relative à au moins un contenu multimédia d'un utilisateur d'un second réseau (NW-B) auxquels ledit utilisateur du premier réseau est autorisé à accéder par une règle d'accès (RA), d'interrogation d'une entité de confiance (PFS) s'interfaçant entre le premier réseau et le second réseau, en vue d'obtenir un catalogue de contenus;
- des moyens de transfert d'une requête d'accès (M6) à un contenu multimédia (C) sélectionné par l'utilisateur parmi ledit catalogue, en provenance de l'utilisateur (T-A) du premier réseau vers l'entité de confiance (PFS).

12. Programme d'ordinateur comportant des instructions pour l'exécution des étapes d'un procédé de contrôle selon l'une quelconque des revendications 1 à 4 lorsque ledit programme est exécuté par un ordinateur.

13. Programme d'ordinateur comportant des instructions pour l'exécution des étapes d'un procédé de traitement selon l'une quelconque des revendications 5 à 7 lorsque ledit programme est exécuté par un ordinateur.

14. Programme d'ordinateur comportant des instructions pour l'exécution des étapes d'un procédé de transfert selon la revendication 8 lorsque ledit programme est exécuté par un ordinateur.

15. Système comportant au moins :
- un dispositif de contrôle (CCP-B) d'un premier réseau selon la revendication 9 ;
- une passerelle (HGW-B) dudit premier réseau selon la revendication 10 ; et
- une entité de confiance mettant en oeuvre une interface entre ledit premier réseau (NW-B) et un second réseau (NW-A), comportant :
- des moyens de réception d'un message (M2) de notification en provenance dudit dispositif de contrôle du premier réseau, ledit message contenant une règle d'accès distance autorisant un accès d'un utilisateur du second réseau à des contenus multimédia d'un utilisateur du premier réseau ;
- des moyens de réception d'une requête d'accès (M5,M6) en provenance d'un utilisateur (T-A) du second réseau (NW-A) relative à au moins un contenu multimédia d'un utilisateur du premier réseau indexé dans le premier réseau (NW-B) ;
- des moyens de vérification visant à contrôler que ledit utilisateur du second réseau est autorisé à accéder à des contenus multimédia dudit utilisateur du premier réseau au moyen de la règle d'accès distante ;
- des moyens de transfert de la requête d'accès vers ladite passerelle (HGW-B) du premier réseau activés si ledit utilisateur du second réseau est autorisé ; et
- des moyens de rejet de la requête activés sinon.

## Patentansprüche

1. Steuerverfahren, das von einer Steuervorrichtung (CCP-B) eines ersten Netzes (NW-B) ausgeführt wird und das Folgendes umfasst:
- einen Schritt (E110) des Empfangens einer Nachricht (M1), die von einem Anwender (T-B) des ersten Netzes ausgesendet wird, wobei die Nachricht eine Zugriffsregel enthält, die einen Anwender eines zweiten Netzes berechtigt, auf wenigstens einen Multimediainhalt (C) zuzugreifen, wobei der Inhalt bei einem Inhaltsserver (MS-B2) des ersten Netzes indexiert wird;
- einen Schritt (E120) des Schickens zu einer Vertraulichkeitsentität (PFS), die die Schnittstelle zwischen dem ersten Netz (NW-B) und dem zweiten Netz (NW-A) steuert, einer ersten Meldenachricht (M2), die eine Fernzugriffsregel (RAD) enthält, die einen Zugriff des Anwenders des zweiten Netzes auf Multimediainhalte des Anwenders des ersten Netzes zulässt; und
- einen ersten Schritt (E160) des Steuerns einer Brücke (HGW-B) des ersten Netzes (NW-B) mittels einer Lokalzugriffsregel, die die Brücke konfiguriert, derart, dass die Brücke einen Inhaltskatalog überträgt, auf den der Anwender des zweiten Netzes bei Empfang einer auf den Katalog bezogenen Zugriffsanforderung, die von dem Anwender des zweiten Netzes über die Vertraulichkeitsentität (PFS) ankommt, zugreifen darf.

2. Steuerverfahren nach Anspruch 1, wobei der erste Steuerschritt (E160) ein Schicken einer zweiten Meldenachricht (M3) umfasst, wobei die zweite Nachricht die Lokalzugriffsregel und eine Umlenkregel, gemäß der die Brücke eine Anforderung für den Zugriff auf einen empfangenen bestimmten Inhalt an einen Inhaltsserver (MS-B2) überträgt, enthält.

3. Steuerverfahren nach Anspruch 1, das außerdem Folgendes umfasst:
- einen Schritt (E40) des Schickens zu dem Anwender (T-B) des ersten Netzes einer Liste, die wenigstens einen Inhaltsserver des ersten Netzes, der Multimediainhalte indexiert, enthält; und
- bei Empfang (E50) einer Auswahl eines Servers (MS-B2) aus der Liste durch den Anwender des ersten Netzes einen Schritt (E60) des Schickens an diesen einer Liste von Multimediainhalten, die bei diesem Server indexiert werden, um wenigstens einen Multimediainhalt (C) auszuwählen, für den er einen Anwender des zweiten Netzes berechtigt, auf ihn zuzugreifen.

4. Steuerverfahren nach Anspruch 1, das außerdem Folgendes umfasst:
- einen Schritt (G160) des Detektierens des Endes eines Zugriffs auf einen Multimediainhalt (C) durch den Anwender des zweiten Netzes (T-A); und
- einen zweiten Steuerschritt (G170), der die Brücke in der Weise konfiguriert, dass eine Umlenkregel, die auf die Brücke angewendet wird und gemäß der diese an den Server (MS-B2), der den Multimediainhalt (C) indexiert, eine Anforderung für den Zugriff auf diesen Inhalt, die von einem Anwender des zweiten Netzes (T-A) empfangen wird, überträgt, deaktiviert wird.

5. Verarbeitungsverfahren, das durch eine Brücke (HGW-B) eines ersten Netzes (NW-B) ausgeführt wird, wobei das Verfahren Folgendes umfasst:
- einen Schritt (E170) des Konfigurierens des ersten Netzes mittels einer Lokalzugriffsregel, die von einer Steuervorrichtung (CCP-B) des ersten Netzes empfangen wird und die die Brücke in der Weise konfiguriert, dass bei Empfang einer auf einen Katalog von Multimediainhalten bezogenen Zugriffsanforderung eines Anwenders des ersten Netzes, die von einem Anwender eines zweiten Netzes über eine Vertraulichkeitsentität (PFS) ankommt, die eine Schnittstelle zwischen dem ersten Netz und dem zweiten Netz bildet, die Brücke den Katalog von Multimediainhalten, auf den der Anwender des zweiten Netzes zugreifen darf, überträgt;
- bei Empfang (F190) einer Anforderung (M5) des Zugriffs auf den Inhaltskatalog, die von dem Anwender des zweiten Netzes ankommt, einen Verifikationsschritt (F210), der darauf zielt zu steuern, dass der Anwender des zweiten Netzes berechtigt wird, auf den Katalog zuzugreifen;
- falls der Anwender des zweiten Netzes berechtigt ist:
• einen Schritt (F220) des Erhaltens des Katalogs;
• einen Schritt (F230) des Schickens dieses Katalogs zu der Vertraulichkeitsentität (PFS);
- andernfalls einen Schritt des Zurückweisens der Anforderung.

6. Verarbeitungsverfahren nach Anspruch 5, wobei der Konfigurationsschritt bei Empfang einer Meldenachricht (M3), die eine Lokalzugriffsregel und eine Umlenkregel enthält, gemäß der die Brücke eine Anforderung für den Zugriff auf einen empfangenen bestimmten Inhalt (C) zu einem Inhaltsserver (MS-B2) überträgt, ausgeführt wird.

7. Verarbeitungsverfahren nach Anspruch 5, das außerdem Folgendes umfasst:
- einen Schritt (G70) des Neukonfigurierens der Brücke mit Hilfe einer Umlenkregel, gemäß der die Brücke eine Anforderung für den Zugriff auf einen Multimediainhalt (C), die von einem Anwender des zweiten Netzes empfangen wird, akzeptiert und sie zu dem Server (MS-B2), der den Inhalt indexiert, überträgt;
- einen Schritt (G80) des Schickens einer IP-Adresse (@IP-B) der Brücke zu dem Anwender des zweiten Netzes über die Vertraulichkeitsentität.

8. Übertragungsverfahren, das von einer Steuervorrichtung (CCP-A) eines ersten Netzes (NW-A) ausgeführt wird und das Folgendes umfasst:
- bei Empfang (F150) einer Zugriffsanforderung (M5) eines Anwenders (T-A) des ersten Netzes bezüglich wenigstens eines Multimediainhalts eines Anwenders eines zweiten Netzes (NW-B), auf den der Anwender des ersten Netzes aufgrund einer Zugriffsregel zugreifen darf, einen Schritt (F160) des Abfragens einer Vertraulichkeitsentität (PFS), die eine Schnittstelle zwischen dem ersten Netz und dem zweiten Netz bildet, um einen Inhaltskatalog zu erhalten;
- einen Schritt (G20) des Übertragens einer Anforderung (M6) für den Zugriff auf einen Multimediainhalt (C), der von dem Anwender aus dem Katalog ausgewählt wird, die von dem Anwender (T-A) des ersten Netzes ankommt, zu der Vertraulichkeitsentität (PFS).

9. Vorrichtung (CCP-B) zum Steuern eines ersten Netzes (NW-B), die Folgendes umfasst:
- Mittel (M1) zum Empfangen einer Nachricht, die von einem Anwender (T-B) des ersten Netzes ausgesendet wird, wobei die Nachricht eine Zugriffsregel enthält, die einen Anwender eines zweiten Netzes berechtigt, auf wenigstens einen Multimediainhalt (C) zuzugreifen, wobei der Inhalt bei einem Inhaltsserver (MS-B2) des ersten Netzes indexiert wird;
- Mittel zum Schicken zu einer Vertraulichkeitsentität (PFS), die zwischen dem ersten Netz (NW-B) und dem zweiten Netz (NW-A) eine Schnittstelle bildet, einer ersten Meldenachricht (M2), die eine Fernzugriffsregel enthält, die einen Zugriff eines Anwenders des zweiten Netzes auf Multimediainhalte eines Anwenders des ersten Netzes zulässt; und
- Mittel zum Steuern einer Brücke (HGW-B) des ersten Netzes (NW-B) mittels einer Lokalzugriffsregel, die die Brücke konfiguriert, derart, dass die Brücke einen Inhaltskatalog, auf den ein Anwender des ersten Netzes zugreifen darf, bei Empfang einer auf den Katalog bezogenen Zugriffsanforderung, die von dem Anwender des zweiten Netzes ankommt, über die Vertraulichkeitsentität (PFS) überträgt.

10. Brücke (HGW-B) eines ersten Netzes (NW-B), die Folgendes umfasst:
- Mittel zum Konfigurieren des ersten Netzes mittels einer Lokalzugriffsregel, die von einer Steuervorrichtung (CCP-B) des ersten Netzes empfangen wird, die dafür ausgelegt sind, die Brücke in der Weise zu konfigurieren, dass bei Empfang einer auf einen Katalog von Multimediainhalten eines Anwenders des ersten Netzes bezogenen Zugriffsanforderung, die von einem Anwender eines zweiten Netzes über eine Vertraulichkeitsentität (PFS), die zwischen dem ersten Netz und dem zweiten Netz eine Schnittstelle bildet, ankommt, die Brücke den Katalog von Multimediainhalten, auf die der Anwender des zweiten Netzes zugreifen darf, überträgt;
- Verifikationsmittel, die bei Empfang einer Anforderung (M5) für den Zugriff auf den Inhaltskatalog, die von einem Anwender des zweiten Netzes ankommt und darauf zielt zu steuern, dass der Anwender des zweiten Netzes auf den Katalog zugreifen darf, aktiviert werden;
- Mittel, die aktiviert werden, falls der Anwender des zweiten Netzes berechtigt ist:
• den Katalog zu erhalten; und
• diesen Katalog zu der Vertraulichkeitsentität (PFS) zu schicken;
- Mittel, die andernfalls aktiviert werden, um die Anforderung zurückzuweisen.

11. Vorrichtung (CCP-A) zum Steuern eines ersten Netzes (NW-A), die Folgendes umfasst:
- Mittel, die bei Empfang einer Zugriffsanforderung (M5) eines Anwenders (T-A) des ersten Netzes, die auf wenigstens einen Multimediainhalt eines Anwenders eines zweiten Netzes (NW-B) bezogen ist, auf den der Anwender des ersten Netzes durch eine Zugriffsregel (RA) zugreifen darf, bezogen ist, zum Abfragen einer Vertraulichkeitsentität (PFS), die eine Schnittstelle zwischen dem ersten Netz und dem zweiten Netz bildet, um einen Inhaltskatalog zu erhalten;
- Mittel (M6) zum Übertragen einer Anforderung für den Zugriff auf einen Multimediainhalt (C), der durch den Anwender aus dem Katalog ausgewählt wird, die von dem Anwender (T-A) des ersten Netzes ankommt, zu der Vertraulichkeitsentität (PFS).

12. Computerprogramm, das Befehle für die Abarbeitung der Schritte eines Steuerverfahrens nach einem der Ansprüche 1 bis 4, wenn das Programm durch einen Computer abgearbeitet wird, umfasst.

13. Computerprogramm, das Befehle für die Abarbeitung der Schritte eines Verarbeitungsverfahrens nach einem der Ansprüche 5 bis 7, wenn das Programm durch einen Computer abgearbeitet wird, umfasst.

14. Computerprogramm, das Befehle für die Abarbeitung der Schritte eines Übertragungsverfahrens nach Anspruch 8, wenn das Programm durch einen Computer abgearbeitet wird, umfasst.

15. System, das wenigstens Folgendes umfasst:
- eine Vorrichtung (CCP-B) zum Steuern eines ersten Netzes nach Anspruch 9;
- eine Brücke (HGW-B) des ersten Netzes nach Anspruch 10; und
- eine Vertraulichkeitsentität, die eine Schnittstelle zwischen dem ersten Netz (NW-B) und einem zweiten Netz (NW-A) betreibt und Folgendes umfasst:
- Mittel zum Empfangen einer Meldenachricht (M2), die von der Steuervorrichtung des ersten Netzes ankommt, wobei die Nachricht eine Fernzugriffsregel enthält, die einen Zugriff eines Anwenders des zweiten Netzes auf Multimediainhalte eines Anwenders des ersten Netzes zulässt;
- Mittel zum Empfangen einer Zugriffsanforderung (M5, M6), die von einem Anwender (T-A) des zweiten Netzes (NW-A) ankommt und auf wenigstens einen Multimediainhalt eines Anwenders des ersten Netzes, der in dem ersten Netz (NW-B) indexiert wird, bezogen ist;
- Verifikationsmittel, die darauf zielen zu steuern, dass der Anwender des zweiten Netzes berechtigt ist, auf Multimediainhalte des Anwenders des ersten Netzes mittels der Fernzugriffsregeln zuzugreifen;
- Mittel zum Übertragen der Zugriffsanforderung zu der Brücke (HGW-B) des ersten Netzes, die aktiviert werden, wenn der Anwender des zweiten Netzes berechtigt ist; und
- Mittel zum Zurückweisen der Anforderung, die andernfalls aktiviert werden.

## Claims

1. Control method implemented by a control device (CCP-B) of a first network (NW-B), comprising:
- a step (E110) of receiving a message (M1), transmitted by a user (T-B) of the first network, said message containing an access rule authorizing a user of a second network to access at least one multimedia content (C), said content being indexed with a content server (MS-B2) of the first network;
- a step (E120) of sending, to a trusted entity (PFS) managing the interface between the first network (NW-B) and the second network (NW-A), a first notification message (M2) containing a remote access rule (RAD) authorizing said user of the second network to access multimedia content of said user of the first network; and
- a first step (E160) of controlling a gateway (HGW-B) of the first network (NW-B) by means of a local access rule configuring said gateway, so that said gateway transmits a catalogue of content that said user of the second network is authorized to access on reception of an access request relating to said catalogue from said user of the second network by means of said trusted entity (PFS).

2. Control method according to Claim 1, in which the first control step (E160) comprises a sending of a second notification message (M3), said second message comprising said local access rule and a redirection rule according to which the gateway transfers to a content server (MS-B2) a received request to access a determined content.

3. Control method according to Claim 1, moreover comprising:
- a step (E40) of sending to the user (T-B) of the first network a list comprising at least one content server of the first network indexing multimedia content; and
- on reception (E50) of a selection of a server (MS-B2) from said list by the user of the first network, a step (E60) of sending to said server a list of the multimedia content indexed with this server, for selection of at least one multimedia content (C) that he authorizes a user of the second network to access.

4. Control method according to Claim 1, moreover comprising:
- a step (G160) of detecting the end of an access to a multimedia content (C) by the user of the second network (T-A); and
- a second control step configuring said gateway (G170) so as to deactivate a redirection rule applied by said gateway and according to which said gateway transfers to the server (MS-B2) indexing the multimedia content (C) a request to access this content, which request is received from a user of the second network (T-A).

5. Processing method, implemented by a gateway (HGW-B) of a first network (NW-B), said method comprising:
- a step (E170) of configuring the first network, by means of a local access rule received from a control device (CCP-B) of the first network, and configuring said gateway so that, on reception of an access request relating to a catalogue of multimedia content of a user of the first network from a user of a second network by means of a trusted entity (PFS) interfacing between the first network and the second network, said gateway transmits said catalogue of multimedia content, which said user of the second network is authorized to access;
- on reception (F190) of a request (M5) to access said catalogue of content from said user of the second network, a checking step (F210) aiming to check that said user of the second network is authorized to access said catalogue;
- if said user of the second network is authorized:
o a step (F220) of obtaining the catalogue;
o a step (F230) of sending this catalogue to said trusted entity (PFS);
- otherwise a step of rejecting the request.

6. Processing method according to Claim 5, in which the configuration step is implemented on reception of a notification message (M3) comprising the local access rule and a redirection rule according to which the gateway transfers to a content server (MS-B2) a received request to access a determined content (C).

7. Processing method according to Claim 5, moreover comprising:
- a step (G70) of reconfiguring said gateway using a redirection rule according to which said gateway accepts a request to access a multimedia content (C), which request is received from a user of the second network, and transfers it to said server (MS-B2) indexing said content;
- a step (G80) of sending an IP address (@IP-B) for said gateway to the user of the second network via the trusted entity.

8. Transfer method, implemented by a control device (CCP-A) of a first network (NW-A), comprising:
- on reception (F150) of an access request (M5) from a user (T-A) of the first network relating to at least one multimedia content of a user of a second network (NW-B), which multimedia content said user of the first network is authorized to access by an access rule, a step (F160) of interrogating a trusted entity (PFS) interfacing between the first network and the second network, with the aim of obtaining a catalogue of content;
- a step (G20) of transferring an access request (M6) for a multimedia content (C) selected by the user from said catalogue, from the user (T-A) of the first network to the trusted entity (PFS).

9. Control device (CCP-B) of a first network (NW-B), comprising:
- means for receiving a message (M1), transmitted by a user (T-B) of the first network, said message containing an access rule authorizing a user of a second network to access at least one multimedia content (C), said content being indexed with a content server (MS-B2) of the first network;
- means for sending, to a trusted entity (PFS) interfacing between the first network (NW-B) and the second network (NW-A), a first notification message (M2) containing a remote access rule authorizing a user of the second network to access multimedia content of a user of the first network; and
- means for controlling a gateway (HGW-B) of the first network (NW-B) by means of a local access rule configuring said gateway, so that said gateway transmits a catalogue of content that a user of the second network is authorized to access on reception of an access request relating to said catalogue from said user of the second network by means of said trusted entity (PFS).

10. Gateway (HGW-B) of a first network (NW-B), comprising:
- means for configuring the first network, by means of a local access rule received from a control device (CCP-B) of the first network, which are adapted to configure said gateway so that, on reception of an access request relating to a catalogue of multimedia content of a user of the first network from a user of a second network by means of a trusted entity (PFS) interfacing between the first network and the second network, said gateway transmits said catalogue of multimedia content, which said user of the second network is authorized to access;
- checking means, activated on reception of a request (M5) to access said catalogue of content from a user of the second network, and aiming to check that said user of the second network is authorized to access said catalogue;
- means, activated if said user of the second network is authorized:
o for obtaining the catalogue; and
o for sending this catalogue to said trusted entity (PFS);
- means, otherwise activated, for rejecting the request.

11. Control device (CCP-A) of a first network (NW-A), comprising:
- means, activated on reception of an access request (M5) from a user (T-A) of the first network relating to at least one multimedia content of a user of a second network (NW-B), which multimedia content said user of the first network is authorized to access by an access rule (RA), for interrogating a trusted entity (PFS) interfacing between the first network and the second network, with the aim of obtaining a catalogue of content;
- means for transferring an access request (M6) for a multimedia content (C) selected by the user from said catalogue, from the user (T-A) of the first network to the trusted entity (PFS).

12. Computer program having instructions for executing the steps of a control method according to any one of Claims 1 to 4 when said program is executed by a computer.

13. Computer program having instructions for executing the steps of a processing method according to any one of Claims 5 to 7 when said program is executed by a computer.

14. Computer program having instructions for executing the steps of a transfer method according to Claim 8 when said program is executed by a computer.

15. System having at least:
- a control device (CCP-B) of a first network according to Claim 9;
- a gateway (HGW-B) of said first network according to Claim 10; and
- a trusted entity implementing an interface between said first network (NW-B) and a second network (NW-A), having:
- means for receiving a notification message (M2) from said control device of the first network, said message containing a remote access rule authorizing a user of the second network to access multimedia content of a user of the first network;
- means for receiving an access request (M5, M6) from a user (T-A) of the second network (NW-A) relating to at least one multimedia content of a user of the first network that is indexed in the first network (NW-B) ;
- checking means aiming to check that said user of the second network is authorized to access multimedia content of said user of the first network by means of the remote access rule;
- means for transferring the access request to said gateway (HGW-B) of the first network that are activated if said user of the second network is authorized; and
- means for rejecting the request that are activated otherwise.
